(19) Europäisches Patentamt
European Patent Office
Office européen des brevets

(11) **EP 3 373 268 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **18155954.3**

(22) Anmeldetag: **09.02.2018**

(51) Internationale Patentklassifikation (IPC):
*G08G 1/0962* (2006.01)    *G08G 1/01* (2006.01)
*G06V 20/58* (2022.01)    *G08G 1/0967* (2006.01)
*G08G 1/16* (2006.01)

(52) Gemeinsame Patentklassifikation (CPC):
**G08G 1/0133; G06V 20/582; G08G 1/09623;
G08G 1/09626; G08G 1/096725; G08G 1/096758;
G08G 1/096783; G08G 1/167**

(54) **VERFAHREN ZUM BETREIBEN EINES FAHRERASSISTENZSYSTEMS FÜR EIN FAHRZEUG AUF EINER STRASSE UND FAHRERASSISTENZSYSTEM**

METHOD FOR OPERATING A DRIVER ASSISTANCE SYSTEM FOR A VEHICLE ON A ROAD AND DRIVER ASSISTANCE SYSTEM

PROCÉDÉ DE FONCTIONNEMENT D'UN SYSTÈME D'AIDE À LA CONDUITE POUR UN VÉHICULE SUR UNE CHAUSSÉE ET SYSTÈME D'AIDE À LA CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2017 DE 102017203654**

(43) Veröffentlichungstag der Anmeldung:
**12.09.2018 Patentblatt 2018/37**

(73) Patentinhaber: **VOLKSWAGEN AKTIENGESELLSCHAFT
38440 Wolfsburg (DE)**

(72) Erfinder:
• **Perdomo Lopez, David
38100 Braunschweig (DE)**
• **Waldmann, Rene
38527 Meine (DE)**

(56) Entgegenhaltungen:
**DE-A1- 102011 113 019    DE-A1- 102013 005 362**

# EP 3 373 268 B1

**Beschreibung**

Die vorliegende Erfindung betrifft ein Verfahren zum Betreiben eines Fahrerassistenzsystems für ein Fahrzeug auf einer Straße sowie ein Fahrerassistenzsystem für ein Fahrzeug auf einer Straße.

Moderne Fahrzeuge verfügen in zunehmendem Maße über Fahrerassistenzsysteme, die eine zumindest teilweise automatische Führung des Fahrzeugs erlauben. Bei einer automatisierten Fahrt muss das System dazu in der Lage sein, die Umgebung des Fahrzeugs wahrzunehmen, eine Interpretation der Umgebung zu erstellen und anhand dieser Interpretation Fahrentscheidungen zu treffen. Von besonderer Bedeutung sind hierbei Kreuzungen, bei denen oft eine besonders komplexe Situation beurteilt werden muss. Insbesondere sind Verkehrsregelungen zu berücksichtigen, die beispielsweise durch verkehrsrechtliche Vorgaben oder spezifische Regelungen an der jeweiligen Kreuzung definiert sind.

Bei dem in der DE 10 2005 0220 429 A1 vorgeschlagenen Verfahren zur Unterstützung eines Fahrers beim Überqueren einer Verkehrskreuzung ist vorgesehen, dass die Kreuzung zunächst in mehrere Zonen eingeteilt wird. Für jede der Zonen wird anhand von Umgebungsinformationen ein situationsabhängiger Zustandswert für die Befahrbarkeit bestimmt und es wird eine zum Überqueren der Kreuzung geeignete Fahrbewegung vor der Einfahrt in die Kreuzung festgelegt. Bei Gefahren kann eine Fahrerwarnung ausgegeben werden.

Die DE 10 2014 011 117 A1 beschreibt ein Fahrerassistenzsystem, bei dem mittels einer Beleuchtungseinrichtung ein in einer digitalen Karte befindliches Objekt mit Licht markiert werden kann. Solche Objekte erfordern eine besondere Aufmerksamkeit des Fahrers, ferner können dabei Bereiche auf der Straße markiert werden, beispielsweise Kreuzungen.

Das in der US 2016/0293004 A1 beschriebene Verfahren zum Steuern und Überwachen einer Ampel zur Optimierung von Wartezeiten sieht vor, dass Ampeln die Durchfahrt von Fahrzeugen regeln. Sie können mit Fahrzeugen kommunizieren und mitteilen, welche optimale Geschwindigkeit eine kontinuierliche Bewegung ermöglicht.

Das Dokument DE102013005362 beschreibt ein Verfahren zum Erfassen einer Verkehrssituation.

Der vorliegenden Erfindung liegt die Aufgabe zugrunde, ein Verfahren zum Betreiben eines Fahrerassistenzsystems für ein Fahrzeug auf einer Straße sowie ein Fahrerassistenzsystem bereitzustellen, durch die eine sichere und schnell durchführbare Interpretation einer Verkehrssituation ermöglicht wird.

Erfindungsgemäß wird diese Aufgabe durch ein Verfahren mit den Merkmalen des Anspruchs 1 und ein Fahrerassistenzsystem mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren der eingangs genannten Art werden Umgebungsdaten über die Straße und über eine Umgebung des Fahrzeugs erfasst. Anhand der erfassten Umgebungsdaten wird zumindest eine Verkehrsregelung für einen in Fahrtrichtung vor dem Fahrzeug befindlichen Straßenabschnitt erfasst und dem Fahrzeug zugeordnet. Ferner wird für den Straßenabschnitt anhand der dem Fahrzeug zugeordneten Verkehrsregelung eine Passierbarkeits-Bewertung erzeugt und ausgegeben. Dabei wird die Passierbarkeits-Bewertung ferner anhand eines Vertrauensparameters erzeugt, welcher anhand der erfassten Umgebungsdaten bestimmt wird und ein Maß für eine Komplexität einer Regelungssituation für den Straßenabschnitt umfasst.

Durch die Berücksichtigung des Vertrauensparameters kann vorteilhafterweise eine besonders zuverlässige Beurteilung der Situation, insbesondere an einer Kreuzung, erreicht werden und auf der Beurteilung basierende Fahrentscheidungen können besonders sicher getroffen werden. Ferner erlaubt das erfindungsgemäße Verfahren eine besonders schnelle Verarbeitung der Umgebungsdaten, die zur Beurteilung der Situation herangezogen werden. Diese Beurteilung kann insbesondere erfolgen, ohne dass dazu eine vollständige Interpretation der über die Regelungssituation erfassten Daten ausgeführt werden muss beziehungsweise auch dann, wenn die Passierbarkeits-Bewertung nicht korrekt bestimmt werden kann. Die Beurteilung erfolgt daher auch besonders schnell und kann bei begrenzten verfügbaren Ressourcen in Echtzeit durchgeführt werden.

Die Erfassung der Umgebungsdaten erfolgt auf an sich bekannte Weise, etwa mittels einer Kamera, einer Stereokamera, eines Laserscanners und/oder eines anderen Detektortyps. Alternativ oder zusätzlich kann ein Verfahren zur Kommunikation zwischen einem Fahrzeug und anderen Einrichtungen der Verkehrsinfrastruktur (*Car2X*) verwendet werden, wobei beispielsweise Informationen über Ampelphasen oder andere Verkehrsregelungen direkt mittels einer entsprechenden Schnittstelle an das Fahrzeug übertragen werden.

Erfindungsgemäß betreffen die Umgebungsdaten die Straße und eine Umgebung des Fahrzeugs. Das heißt, die erfassten Umgebungsdaten werden so erfasst, dass Eigenschaften der Straße innerhalb eines bestimmten, vom jeweils verwendeten Detektor abhängigen Raums in der Umgebung des Fahrzeugs erfasst werden. Insbesondere werden die Umgebungsdaten innerhalb eines bestimmten Radius um die aktuelle Position des Fahrzeugs herum erfasst. Die Umgebungsdaten umfassen Informationen über Einrichtungen der Verkehrsinfrastruktur, beispielsweise Verkehrsbauwerke, oder Verkehrsregelungseinrichtungen wie Lichtsignalanlagen (Ampeln), Verkehrszeichen und Fahrbahnmarkierungen, sowie optional über weitere Charakteristika der Umgebung, etwa die Vegetation, Bebauung und/oder andere. Anhand der erfassten Umgebungsdaten wird in einem weiteren Schritt zumindest eine Verkehrsregelung erfasst. Dazu wird eine Erkennung von Lichtsignalanlagen, Verkehrszeichen, Fahrbahnmarkierungen und/oder weiteren Einrichtungen zum Signalisieren von Vorgaben für das Verhalten der Verkehrsteilnehmer durchgeführt. Dabei kann zudem vorgesehen sein, dass eine durch eine Person vorgenommene Verkehrsregelung, etwa bei der Regelung des Verkehrs durch die Polizei beziehungsweise einen Verkehrsposten, erkannt wird. Die Erkennung erfolgt so, dass Verkehrsregelungen für einen bestimmten Abschnitt der Straße erfasst werden, der sich in Fahrtrichtung vor dem Fahrzeug befindet. Die Verkehrsregelung kann also in einem räumlichen Zusammenhang mit dem Straßenabschnitt stehen, etwa wenn eine Einrichtung, durch welche die Regelung signalisiert wird, sich im direkten Umfeld des Straßenabschnitts oder davor befindet.

Insbesondere wird zunächst das Vorhandensein einer Einrichtung zum Signalisieren einer Verkehrsregelung erkannt, wobei beispielsweise eine Lichtsignalanlagen oder ein Verkehrsschild detektiert wird. In einem weiteren Schritt wird erkannt, welches Signal durch die zuvor erkannte Einrichtung ausgegeben wird, beispielsweise indem ein auf einem Verkehrsschild abgebildetes Zeichen und/oder die Form und Farbe eines Lichtsignals einer Lichtsignalanlage erfasst und ausgewertet wird. Dabei können verschiedene Kategorien von Verkehrsregelungen erkannt werden, die sich etwa in ihrer Auswirkung für die Passierbarkeit des Straßenabschnitts unterscheiden.

Die Verkehrsregelung wird dann dem Fahrzeug zugeordnet. Dabei wird insbesondere berücksichtigt, wo sich das Fahrzeug auf der Straße befindet und auf welchen Bereich der Straße sich die Verkehrsregelung bezieht. Insbesondere werden dabei Fahrstreifen auf der Straße berücksichtigt und es wird bestimmt, auf welchem Fahrstreifen sich das Fahrzeug befindet sowie welchem Fahrstreifen die Verkehrsregelung zuzuordnen ist. In einem weiteren Schritt kann zudem bestimmt werden, ob die Verkehrsregelung für das spezifische Fahrzeug relevant ist, beispielsweise bei einer Verkehrsregelung für bestimmte Fahrzeugtypen, etwa Lastkraftwagen.

Anhand der Analyse der Umgebungsdaten und der Bestimmung der für das Fahrzeug und den Straßenabschnitt relevanten Verkehrsregelungen wird eine Passierbarkeits-Bewertung erzeugt, die anschließend ausgegeben wird. Die Ausgabe kann dabei beispielsweise durch eine Anzeige erfolgen, wobei ein Ausgabesignal an einer Anzeigeeinheit übertragen wird. Als Ausgabe im Sinne der Erfindung kann ferner verstanden werden, dass ein Ausgabesignal über eine Schnittstelle an eine weitere Einrichtung des Fahrzeugs übertragen wird, beispielsweise an eine Einheit zur automatischen Steuerung des Fahrzeugs, eine Navigationseinheit oder eine andere Einrichtung, für die Informationen über die Passierbarkeit eines Straßenabschnitts für das Fahrzeug relevant sind.

Die Passierbarkeits-Bewertung umfasst Informationen darüber, ob das Fahrzeug zu einem bestimmten Zeitpunkt den Straßenabschnitt befahren darf. Ihre Erzeugung entspricht daher einer Interpretation der Daten, welche über die Straße, insbesondere den Straßenabschnitt, sowie über Signale für Verkehrsregelungen erfasst wurden. Insbesondere sind ferner Informationen darüber umfasst, in welcher Weise der Straßenabschnitt passierte werden darf, beispielsweise mit welcher Geschwindigkeit. Die Passierbarkeits-Bewertung kann ferner vor dem Straßenabschnitt liegende Bereiche der Straße betreffen, beispielsweise wenn der Straßenabschnitt nicht befahren werden darf, etwa weil eine Ampel die Durchfahrt verbietet, und das Fahrzeug in einem Bereich außerhalb des Straßenabschnitte zum Halt gebracht werden soll. Ferner kann die Passierbarkeits-Bewertung weitere Informationen umfassen, welche eine Fahrt des Fahrzeugs in dem oder durch den Bereich des Straßenabschnitts betreffen.

Erfindungsgemäß umfassen die erfassten Umgebungsdaten Straßendaten über den Verlauf des in Fahrtrichtung vor dem Fahrzeug befindlichen Abschnitts der Straße sowie über einen oder mehrere Fahrstreifen der Straße. Dadurch kann vorteilhafterweise die Verkehrssituation für das Fahrzeug besonders genau erfasst und umfassend analysiert werden. Zudem können die Umgebungsdaten so erfasst werden, dass der von dem Fahrzeug befahrene Fahrstreifen besonders zuverlässig und einfach erkannt wird und relevante Verkehrsregelungen besonders gut zugeordnet werden können.

Insbesondere umfassen die Straßendaten Informationen über einen geraden oder kurvigen Verlauf der Straße, Positionen von Kreuzungen oder Übergängen sowie weitere Besonderheiten des Straßenverlaufs sowie eines Verkehrswegenetzes, zu dem die Straße gehört. Dabei wird besonders der Bereich des bei dem Verfahren betrachteten Straßenabschnitts berücksichtigt, allerdings können ferner andere Abschnitte der Straße, die mit dem Straßenabschnitt in Beziehung stehen können, ebenso berücksichtigt werden. Anhand der Straßendaten kann eine Kreuzung innerhalb des durch den Straßenabschnitt definierten Bereichs erkannt beziehungsweise eine Kreuzung kann lokalisiert werden. Ferner können Eigenschaften der Kreuzung bestimmt werden, beispielsweise eine Anzahl der aufeinandertreffenden Verkehrswege sowie ihre relativen Positionen und Winkel.

Die Straßendaten betreffen ferner Fahrstreifen der Straße, wobei insbesondere deren Anzahl, Markierung und/oder Anordnung erfasst wird. Dabei erfolgt die Erfassung der Straßendaten für den Straßenabschnitt, für den durch das erfindungsgemäße Verfahren eine Passierbarkeits-Bewertung erzeugt werden soll, allerdings kann die Erfassung ferner für weitere Abschnitte der Straße erfolgen.

Die Straßendaten umfassen Informationen, die für die Zuordnung des Fahrzeugs beziehungsweise einer Verkehrsregelung zu einem Fahrstreifen berücksichtigt werden können. Dies sind insbesondere Daten über die räumliche Anordnung von Einrichtungen, durch die Verkehrsregelungen signalisiert werden, relativ zu der Straße, den einzelnen Fahrstreifen der Straße sowie dem Straßenabschnitt.

Die Sicherheit, mit der Verkehrsregelungen, Fahrstreifen und das Fahrzeug einander zugeordnet werden können, hängt stark davon ab, wie komplex die Regelungssituation für den Straßenabschnitt ist. Beispielsweise kann die Zuordnung einer Verkehrsregelung zu einem Fahrstreifen dadurch erschwert sein, dass mehrere Fahrstreifen und/oder mehrere Einrichtungen zum Signalisieren der Verkehrsregelung vorhanden sind. Die Komplexität steigt dabei typischerweise mit der Anzahl der Kombinationsmöglichkeiten für die Fahrstreifen und Verkehrsregelungen im Bereich des Straßenabschnitts. Zudem kann eine erhöhte Komplexität dadurch entstehen, dass eine eindeutige Zuordnung einer Verkehrsregelung zu einem bestimmten Fahrstreifen erschwert wird, etwa weil ein Verkehrszeichen oder eine Lichtsignalanlage für mehrere Fahrstreifen relevant ist. Umgekehrt können mehrere Verkehrszeichen oder Lichtsignalanlagen den gleichen Fahrstreifen betreffen.

Bei dem erfindungsgemäßen Verfahren ist daher vorgesehen, dass ein Vertrauensparameter erzeugt wird, der ein Maß für die Komplexität der Regelungssituation widerspiegelt und insbesondere wiedergibt, mit welcher Sicherheit das Verfahren für eine bestimmte Regelungssituation zu korrekten Ergebnissen führt. Insbesondere ist der Vertrauensparameter ein quantitatives Maß für die Komplexität. Die Bestimmung des Vertrauensparameters kann auf unterschiedliche Weisen erfolgen, wobei die Umgebungsdaten verwendet werden, um zu einer Beschreibung der Regelungssituation zu gelangen und den Vertrauensparameter zu bestimmen. Ferner können beliebige andere Daten berücksichtigt werden, beispielsweise indem bereits vorverarbeitete Daten von einer fahrzeugexternen Einrichtung empfangen werden, beispielsweise indem über einen zentralen Server ein Vertrauensparameter für einen bestimmten Straßenabschnitt bereitgestellt wird oder Daten zu seiner Bestimmung bereitgestellt werden.

Anhand des Vertrauensparameters kann eine weitere Information darüber bereitgestellt werden, mit welcher Sicherheit die Passierbarkeits-Bewertung durch das Verfahren erzeugt wird. Beispielsweise kann es zweckmäßig sein, bei einer Passierbarkeits-Bewertung für einen besonders kritischen Bereich, in dem etwa ein Konflikt mit weiteren Verkehrsteilnehmern vorliegen könnte, nur eine mit besonders hoher Sicherheit bestimmte Verkehrsregelung zu akzeptieren, um damit eine autonome Steuerung des Fahrzeugs durchzuführen. Alternativ oder zusätzlich kann anhand des Vertrauensparameters eine Ausgabe erzeugt werden, durch die einem Fahrer des Fahrzeugs mitgeteilt wird, dass die automatische Bestimmung der Passierbarkeits-Bewertung mit beispielsweise besonders hoher oder niedriger Sicherheit erfolgt ist.

Der Vertrauensparameter steht dabei im Gegensatz zu einer Standardabweichung oder einer Konfidenz, wie sie etwa für einzelne Verfahrensschritte bestimmt werden kann, etwa für die Erkennung der Verkehrsregelungen, ihre Zuordnung zu den Fahrstreifen sowie die Zuordnung zu dem Fahrzeug. Die bei diesen Schritten bestimmbare Unsicherheit kann zwar bei der Bestimmung des Vertrauensparameters berücksichtigt werden, dieser wird jedoch selbst erzeugt anhand der gesamten erfassten Konfiguration der Straße sowie der Einrichtungen im Umfeld der Straße, durch welche Verkehrsregelungen signalisiert werden. Das heißt, anhand des Vertrauensparameters ist abschätzbar, mit welcher Sicherheit die Erzeugung einer Passierbarkeits-Bewertung, einschließlich der damit verbundenen Konfidenzwerte, in der jeweiligen Situation erfolgen kann. Insbesondere kann der Vertrauensparameter bereits vor der Zuordnung der Verkehrsregelungen zu den Fahrstreifen sowie vor der Zuordnung des Fahrzeugs zu seinem Fahrstreifen erfasst werden. Im Gegensatz dazu wird eine Standardabweichung oder Konfidenz für einen einzelnen Schritt der Zuordnung erst bei der Durchführung des jeweiligen Schrittes bestimmt. Erfindungsgemäß wird der Vertrauensparameter ohne die konkrete Bestimmung einer Zuordnung der Verkehrsregelung zu dem Fahrzeug bestimmt.

Gemäß einer Ausbildung des Verfahrens werden ferner Kartendaten über die Straße in der Umgebung des Fahrzeugs erfasst, wobei die Kartendaten Informationen über eine Anzahl der Fahrstreifen der Straße, die Position von Kreuzungen und/oder die Position von Verkehrsregelungseinrichtungen umfassen. Dadurch kann vorteilhafterweise eine Analyse der Situation anhand vorgegebener Kartendaten erfolgen, wobei diese Daten besonders zuverlässig sein können.

Die Erfassung der Kartendaten erfolgt auf an sich bekannte Weise, beispielsweise anhand eines Navigationssystems des Fahrzeugs. Die Kartendaten können von einem nichtflüchtigen Speichermedium des Fahrzeugs, einer mobilen Einheit oder von einer externen Einheit, etwa einem externen Server, erfasst werden. Sie umfassen insbesondere Informationen über ein Verkehrswegenetz, von dem die Straße und insbesondere der Straßenabschnitt umfasst ist. Die Informationen umfassen beispielsweise absolute oder relative Positionen, etwa von Kreuzungen, Abweichungen der Verkehrswege von einem geraden Verlauf, die Anzahl und Anordnung von Fahrstreifen sowie weitere Parameter, beispielsweise verschiedene Typen von Verkehrswegen und Straßen.

Anhand der Kartendaten kann beispielsweise eine Positionsbestimmung durchgeführt werden, wobei insbesondere ein Map-Matching-Verfahren angewandt werden kann. Bei dem Verfahren kann zudem eine Unsicherheit für die Kartendaten berücksichtigt werden, beispielsweise indem Positionsangaben mit einer Angabe über deren Genauigkeit erfasst werden. Die Kartendaten können alternativ oder zusätzlich zu den Straßendaten erfasst werden, wobei die verschiedenen Typen von Daten sich insbesondere ergänzen können.

Bei einer weiteren Ausbildung umfassen die erfassten Umgebungsdaten Ego-Positionsdaten und anhand der Ego-Positionsdaten wird eine Ego-Positions-Wahrscheinlichkeitsverteilung für die Ego-Position des Fahrzeugs bestimmt. Dadurch kann vorteilhafterweise berücksichtigt werden, mit welcher Sicherheit die Bestimmung der Position des Fahrzeugs erfolgt.

Die Erfassung der Ego-Positionsdaten erfolgt auf an sich bekannte Weise, beispielsweise anhand eines Satellitennavigationssystems (GPS), mittels einer Lokalisierung des Fahrzeugs anhand von Landmarken, die durch Sensoren des Fahrzeugs erfasst werden und insbesondere von den Umgebungsdaten umfasst sind, oder durch andere Umgebungsdaten, die etwa mittels einer Stereokamera, einer Kamera oder eines Laserscanners (Lidar) erfasst werden. Ferner kann ein *Map-Matching*-Verfahren angewandt werden.

Die Ego-Position kann als absolute Position innerhalb eines globalen Koordinatensystems oder als relative Position eines lokalen Koordinatensystems erfasst werden. Beispielsweise kann die Ego-Position relativ zu einem Orientierungspunkt erfasst werden. Insbesondere wird die Position relativ zu einer Breite der Straße erfasst, wobei die Breite senkrecht zur Längserstreckung der Straße verläuft.

Die Ego-Positions-Wahrscheinlichkeitsverteilung umfasst die Wahrscheinlichkeit, dass sich das Fahrzeug an einer bestimmten Position befindet, in Abhängigkeit von einer Reihe verschiedener potentieller Positionen. Wird beispielsweise die Ego-Position des Fahrzeugs bei einer bestimmten Position erfasst, so weist die entsprechende Wahrscheinlichkeitsverteilung ein Maximum bei dieser bestimmten Position auf, während die Wahrscheinlichkeit für weitere Positionen in der Umgebung geringer ist, wobei die Verteilung von der Genauigkeit abhängt. Ferner kann die Ego-Positions-Wahrscheinlichkeitsverteilung für diskrete Werte von potentiellen Positionen bestimmt werden, insbesondere für bestimmte Bereiche der Straße.

Bei einer Weiterbildung weist die Straße zumindest zwei Fahrstreifen auf und die Ego-Positions-Wahrscheinlichkeitsverteilung wird relativ zu den Fahrstreifen der Straße bestimmt. Dadurch kann vorteilhafterweise die Ego-Position des Fahrzeugs relativ zu den Fahrstreifen mit einer quantitativ bestimmten Sicherheit bestimmt werden. Es wird also bestimmt, auf welchem Fahrstreifen sich das Fahrzeug befindet und mit welcher Sicherheit diese Aussage getroffen werden kann.

Insbesondere werden dazu anhand der Umgebungsdaten, etwa der erfassten Straßendaten und/oder Kartendaten, die Fahrstreifen der Straße sowie ihre Anordnung und Lage erfasst.

Die Bestimmung der Position des Fahrzeugs relativ zu den Fahrstreifen erfolgt auf an sich bekannte Weise, wobei ferner eine Wahrscheinlichkeit für die Ego-Position des Fahrzeugs auf den jeweiligen Fahrstreifen bestimmt wird. Es wird eine Verteilung dieser Wahrscheinlichkeit für die verschiedenen Fahrstreifen der Straße bestimmt. Ferner kann die Bestimmung der Ego-Position des Fahrzeugs so erfolgen, dass auch eine Position innerhalb der Fahrstreifen bestimmt wird, beispielsweise eine Ego-Position in der Mitte eines Fahrstreifens oder seitlich versetzt dazu. Auch hierzu kann eine Wahrscheinlichkeitsverteilungen bestimmt werden beziehungsweise die Wahrscheinlichkeitsverteilung kann von der Ego-Positions-Wahrscheinlichkeitsverteilungen umfasst sein.

Bei einer Ausgestaltung erfolgt die Zuordnung der erfassten Verkehrsregelung zu dem Fahrzeug anhand der Ego-Positions-Wahrscheinlichkeitsverteilung. Dadurch kann vorteilhafterweise die Verkehrsregelung, die für das Fahrzeug berücksichtigt werden muss, besonders einfach ermittelt werden, wobei ferner bestimmt wird, mit welcher Sicherheit diese Zuordnung erfolgt.

Insbesondere wird in einem ersten Schritt, nachdem die Verkehrsregelung an sich erfasst und erkannt wurde, für die Fahrstreifen der Straße bestimmt, für welchen davon die Verkehrsregelung relevant ist. Beispielsweise kann eine Lichtsignalanlagen so gebildet sein, dass sie lediglich einem Fahrstreifen zugeordnet ist. In diesem Fall wird eine durch sie signalisierte Verkehrsregelung dem Fahrzeug anhand der Verteilung der Wahrscheinlichkeiten für die Ego-Position auf dem entsprechenden Fahrstreifen zugeordnet.

Bei einer Ausbildung des Verfahrens umfassen die erfassten Umgebungsdaten Verkehrsregelungsdaten und zum Erfassen der Verkehrsregelung anhand der Verkehrsregelungsdaten wird eine Verkehrsregelungs-Wahrscheinlichkeitsverteilung für eine Vielzahl vorgegebener Verkehrsregelungskategorien bestimmt. Auf diese Weise wird eine Interpretation der Verkehrsregelungsdaten anhand einer Verteilung von Wahrscheinlichkeiten für die vorgegebenen Kategorien durchgeführt.

Die Verkehrsregelungsdaten umfassen beispielsweise Daten über Verkehrsregelungseinrichtungen, das heißt Verkehrszeichen, Schilder, Fahrbahnmarkierungen und Lichtsignalanlagen. Ferner können weitere Daten umfasst sein, welche für die Bewertung der Fahrsituation des Fahrzeugs relevant sind, beispielsweise allgemein vorgegebene Regelungen für Fahrsituation, bei denen etwa keine ausdrückliche Vorfahrtsregelung durch Verkehrszeichen angegeben ist. Insbesondere können Informationen über den durch eine Verkehrsregelungseinrichtung signalisierten Regelungsgehalt umfasst sein, etwa über eine spezifische Vorschrift betreffend die Erlaubnis zum Einfahren in eine Kreuzung oder eine Vorfahrtsregelung. Zudem können Informationen umfasst sein, welche eine spezifische Zuordnung der signalisierte Verkehrsregelung zu dem Fahrzeug betreffen.

Bei der Erfassung der Verkehrsregelungsdaten können unterschiedliche an sich bekannte Verfahren angewandt werden. Insbesondere können Sensoren des Fahrzeugs, etwa eine Kamera oder ein Laserscanner, verwendet werden oder es kann eine Übertragung von Daten mittels einer geeigneten Verkehrsinfrastruktur, etwa bei einer direkten Kommunikation zwischen Verkehrsregelungseinrichtungen und dem Fahrzeug (*Car-to-Infrastructure*, *Car-to-Roadside*), verwendet werden.

Die Verkehrsregelungskategorien können beispielsweise verschiedene Typen von Einrichtungen zum Signalisieren der Verkehrsregelung umfassen, beispielsweise Straßenschilder, Fahrbahnmarkierungen oder Lichtsignalanlagen beziehungsweise Ampeln. Auf diese Weise kann zwischen verschiedenen Kategorien differenziert werden, um eine sichere Auswertung der unterschiedlich gearteten Signale zu ermöglichen. Die Verkehrsregelungskategorien können auf verschiedene Weise vorgegeben werden, etwa durch eine Voreinstellung des Systems oder durch eine weitere Einrichtung des Fahrzeugs, etwa ein Fahrerassistenzsystem.

Bei einer weiteren Ausbildung wird anhand der erfassten Umgebungsdaten eine Zuordnungs-Wahrscheinlichkeitsverteilung für eine Zuordnung von Verkehrsregelungseinrichtungen zu dem Fahrzeug bestimmt. Dadurch wird vorteilhafterweise bestimmt, mit welcher Wahrscheinlichkeit das Signal einer bestimmten Verkehrsregelungseinrichtung für das Fahrzeug relevant ist. Insbesondere umfasst diese Wahrscheinlichkeitsverteilung die für unterschiedliche Kombinationen von Verkehrsregelungen, Fahrstreifen und Fahrzeugen bestimmten Wahrscheinlichkeiten.

Die Zuordnungs-Wahrscheinlichkeitsverteilung kann bei einer Ausführung anhand zweier verschiedener Wahrscheinlichkeitsverteilungen bestimmt werden, nämlich anhand einer ersten Wahrscheinlichkeitsverteilung für die Zuordnung einer Verkehrsregelung zu einem Fahrstreifen und einer zweiten Wahrscheinlichkeitsverteilung für die Zuordnung des Fahrzeugs zu einem Fahrstreifen. Diese Wahrscheinlichkeitsverteilungen umfassen insbesondere für jeden der Fahrstreifen der Straße die Wahrscheinlichkeit, dass eine bestimmte Verkehrsregelungseinrichtung beziehungsweise das Fahrzeug diesem Fahrstreifen zugeordnet ist.

Insbesondere werden Straßendaten, Verkehrsregelungsdaten und/oder Ego-Positionsdaten bei der Erzeugung der Zuordnungs-Wahrscheinlichkeitsverteilung berücksichtigt. Ferner kann die Wahrscheinlichkeitsverteilung für alle einzelnen Fahrstreifen der Straße bestimmt werden, wobei jeweils die Wahrscheinlichkeit für eine Zuordnung einer Verkehrsregelungseinrichtung zu einem Fahrstreifen sowie des Fahrzeugs zu den Fahrstreifen bestimmt wird. Die Zuordnung erfolgt demnach anhand der Fahrstreifen.

Alternativ oder zusätzlich kann die Zuordnung auf andere Weise erfolgen, etwa durch eine fahrzeugspezifische Zuordnung.

Bei einer Weiterbildung umfasst die Passierbarkeits-Bewertung eine Passierbarkeits-Wahrscheinlichkeitsverteilung. Dadurch kann vorteilhafterweise berücksichtigt werden, mit welcher Sicherheit die Passierbarkeits-Bewertung bestimmt werden kann.

Die Passierbarkeits-Wahrscheinlichkeitsverteilung wird insbesondere für eine Vielzahl vorgegebener Passierbarkeitszustände erzeugt. Beispielsweise kann die Bewertung anhand von Passierbarkeitszuständen erfolgen, die durch ein Fahrerassistenzsystem oder eine weitere Einrichtung des Fahrzeugs bereitgestellt werden. Beispielsweise kann bei den Passierbarkeitszuständen unterschieden werden, ob ein bestimmtes Fahrmanöver durchgeführt werden kann oder nicht, und es können Bedingungen für das Manöver bestimmt werden.

Bei einer Ausbildung wird für zumindest eine der bestimmten Wahrscheinlichkeitsverteilungen, das heißt für die Ego-Positions-Wahrscheinlichkeitsverteilung, die Zuordnungs-Wahrscheinlichkeitsverteilung, die Verkehrsregelungs-Wahrscheinlichkeitsverteilung und/oder die Passierbarkeits-Wahrscheinlichkeitsverteilung, eine zeitliche Glättung anhand eines Glättungsparameters durchgeführt, wobei bevorzugt eine exponentielle gleitende Mittelung (*exponential moving average*), besonders bevorzugt eine konditionale gleitende exponentielle Mittelung (*conditional exponential moving average*) durchgeführt wird. Dadurch können vorteilhafterweise zeitliche Schwankungen bei der Detektion etwa der Umgebungsdaten ausgeglichen werden und es kann eine auch in einer zeitlichen Dimension konsistente Interpretation der Umgebung des Fahrzeugs und des Straßenabschnitts erreicht werden.

Zeitliche Variationen bei der Bestimmung der Wahrscheinlichkeitsverteilungen können beispielsweise durch eine sich verändernde Verkehrssituation entstehen. Ferner können bei der Erfassung der Umgebungsdaten zeitliche Schwankungen zu berücksichtigen sein, etwa wenn durch eine Kamera Daten in einem Erfassungsraum erfasst werden, der durch andere Verkehrsteilnehmer, Verkehrsbauwerke oder andere Einrichtungen zeitweise verdeckt werden kann. Weitere Schwankungen können dadurch entstehen, dass sich die Position des Fahrzeugs zu Verkehrsregelungseinrichtungen verändert, beispielsweise beim Vorbeifahren an einer Ampel, deren Signal nur für ankommende Fahrzeuge erfassbar ist.

Die Glättung erfolgt insbesondere anhand einer gleitenden Mittelung, ferner können allerdings auch andere Verfahren verwendet werden, etwa war ein Filterungsverfahren, wobei insbesondere ein Glättungsparameter verwendet wird. Dieser Glättungsparameter bestimmt den Umgang des Systems mit den zeitlichen Veränderungen, beispielsweise um hochfrequente Schwankungen auszugleichen und niedrigfrequentierte Schwankungen stärker zu berücksichtigen. Auf diese Weise können etwa Schwankungen ignoriert werden, die durch kurzzeitige Änderungen der Detektionsbedingungen verursacht sind. Andererseits können tatsächliche Änderungen der vorliegenden Verkehrssituation, etwa wenn das Signal einer Ampel umgeschaltet wird, berücksichtigt werden.

Die bevorzugte exponentielle Mittelung erlaubt es, durch die Wahl eines geeigneten Glättungsparameters, eine konservative oder nicht-konservative Glättung durchzuführen. Bei einer konservativen Glättung wird eine Veränderung des zugrundeliegenden Signals erst langsam berücksichtigt, bei einer nicht-konservativen Glättung wird dagegen eine Veränderung schnell berücksichtigt.

Bei einer besonders bevorzugten konditionalen gleitenden exponentielle Mittelung kann der Glättungsparameter anhand bestimmter Bedingungen bestimmt werden, etwa je nach der Richtung der Änderung des Signals, also beispielsweise unterschiedlich für einen abfallenden oder ansteigenden Wert.

Alternativ oder zusätzlich kann der Glättungsparameter anhand unterschiedlicher Parameter für verschiedene Bedingungen gebildet werden, beispielsweise um durch einen unterschiedlichen Glättungsparameter verschiedene Glättung für verschiedene Kategorien von Verkehrsregelungseinrichtungen vorzunehmen. Beispielsweise kann berücksichtigt werden, dass eine von einem Verkehrszeichen oder einer Fahrbahnmarkierung signalisierte Verkehrsregelung typischerweise zeitlich konstant ist, während Lichtsignalanlagen wechselnde Signale ausgeben können.

Bei einer weiteren Ausbildung wird anhand der erfassten Umgebungsdaten ein Überquerungszustand bestimmt und der Glättungsparameter wird in Abhängigkeit von dem Überquerungszustand bestimmt. Dadurch kann vorteilhafterweise die Fahrsituation des Fahrzeugs besonders gut zur Interpretation der Umgebungsdaten berücksichtigt werden.

Die Bestimmung des Überquerungszustands erfolgt dabei auf an sich bekannte Weise für den betrachteten Straßenabschnitt, insbesondere eine Kreuzung. Beispielsweise können verschiedene Überquerungszustände für eine Annäherung an eine Kreuzung aus größerer Entfernung, eine Annäherung in geringerer Entfernung und einen Zustand während des Überquerens der Kreuzung berücksichtigt werden. Alternativ oder zusätzlich können weitere Informationen, insbesondere weitere Aspekte der erfassten Umgebungsdaten, zur Verbesserung der Interpretation genutzt werden.

Bei einer Weiterbildung wird der Vertrauensparameter mittels eines Maschinenlernverfahrens bestimmt. Dadurch können vorteilhafterweise unterschiedliche Informationen als Basis für eine zuverlässige Bestimmung herangezogen werden.

Die Bestimmung kann beispielsweise anhand eines Systems erfolgen, das mittels eines vorbekannten Datensatzes trainiert wird und auf diese Weise erkennt, wie zuverlässig das Verfahren, insbesondere die Zuordnung der Verkehrsregelungen zu dem Fahrzeug, in verschiedenen Situationen funktioniert, wobei die Situationen anhand der erfassten Umgebungsdaten sowie weiterer Daten charakterisiert sind. Insbesondere muss kein Modell vorgegeben werden, welches die Bestimmung des Vertrauensparameters durch eindeutige Regeln festlegt, sondern das Maschinenlernverfahren kann zu einer Generalisierung von Entscheidungen aus den Trainingsdatensatz genutzt werden, etwa mittels einer *Support Vector Machine* (*SVM*), eines neuronalen Netzes beziehungsweise eines künstlichen neuronalen Netzes (KNN) oder eines anderen Maschinenlernverfahrens.

Ferner kann vorgesehen sein, dass bei der Ausführung des Verfahrens erfasste Daten verwendet werden, um ein weiteres Training des Systems mittels Maschinenlernen durchzuführen. Auf diese Weise kann eine kontinuierliche Verfeinerung und Verbesserung der Bestimmung des Vertrauensparameters erreicht werden.

Der Vertrauensparameter kann dabei in Abhängigkeit von unterschiedlichen Klassen von Verkehrsregelungseinrichtungen bestimmt werden, beispielsweise durch unterschiedliche Vertrauensparameter für Verkehrsschilder, Fahrbahnmarkierungen und Ampeln. Dabei kann insbesondere berücksichtigt werden, dass eine Zuordnung bestimmter Klassen von Verkehrsregelungseinrichtungen mit unterschiedlich guter Sicherheit erfolgen kann. Beispielsweise können Fahrbahnmarkierungen typischerweise mit hoher Sicherheit einem bestimmten Fahrstreifen zugeordnet werden, während diese Zuordnung für ein am Rand einer mehrspurigen Straße angebrachtes Verkehrsschild oder eine Ampel mit geringerer Sicherheit erfolgen werden kann. Dabei können ferner mehrere Vertrauensparameter für unterschiedliche Klassen von Verkehrsregelungseinrichtungen bestimmt werden und/oder es kann ein Vertrauensparameter für eine Kombination verschiedener Klassen von Verkehrsregelungseinrichtungen vorgesehen sein.

Insbesondere wird der Vertrauensparameter so gebildet, dass er mit einer zunehmenden Anzahl von Fahrstreifen abnimmt. Alternativ oder zusätzlich kann ferner bei einer zunehmenden Anzahl von Verkehrsregelungseinrichtungen, insbesondere des jeweils gleichen Typs, abnehmen. Erfindungsgemäß nimmt Vertrauensparameter ab bei einer zunehmenden Anzahl der Kombinationsmöglichkeiten, in denen die Verkehrsregelungseinrichtungen den Fahrstreifen zugeordnet werden können. Der Vertrauensparameter präsentiert dann eine Abschätzung des Grades an Mehrdeutigkeit bei der Zuordnung.

Bei einer Ausbildung wird die Passierbarkeits-Bewertung für eine vorgegebene Menge von Fahrmanövern erzeugt. Dadurch kann vorteilhafterweise eine gezielte Bewertung einzelner Fahrmanöver für das Fahrzeug vorgenommen werden.

Die Menge der Fahrmanöver, für die eine Passierbarkeits-Bewertung erzeugt wird, kann beispielsweise durch eine Einrichtung des Fahrzeugs vorgegeben werden, beispielsweise durch ein Fahrerassistenzsystem, eine Navigationseinrichtung oder eine Einrichtung zur zumindest teilweise autonomen Steuerung des Fahrzeugs. Alternativ oder zusätzlich können die Fahrmanöver durch eine weitere Einrichtung, insbesondere eine fahrzeugexterne Einrichtung, wie ein Mobilgerät oder einen externen Server, bereitgestellt werden.

Die Menge der Fahrmanöver umfasst insbesondere verschiedene Kategorien von Eingriffen in die Steuerung des Fahrzeugs, wobei die Längssteuerung und/oder die Quersteuerung berücksichtigt werden kann. Beispiele für Fahrmanöver, die von der vorgegebenen Menge umfasst sein können, sind: Rechts oder links abbiegen, Kreuzung in Geradeausrichtung überqueren, an einer Haltelinie anhalten, Fahrstreifenwechsel vornehmen, beschleunigen oder verzögern und so weiter.

Bei einer weiteren Ausbildung wird durch ein Fahrerassistenzsystem eine geplante Trajektorie des Fahrzeugs erzeugt, die vorgegebene Menge von Fahrmanövern wird anhand dieser geplanten Trajektorie erzeugt und anhand der Passierbarkeits-Bewertung wird ein Freigabesignal für das Befahren der geplanten Trajektorie erzeugt. Das Freigabesignal kann dabei natürlich auch ein Signal umfassen, welches die Freigabe verweigert oder bestimmte weitere Bedingungen definiert, unter denen die Freigabe gegeben werden kann. Dadurch wird die Passierbarkeits-Bewertung besonders gezielt für eine spezifische Trajektorie und/oder ein geplantes Fahrmanöver bestimmt.

Durch das Fahrerassistenzsystem kann auf unterschiedliche Weise in die Steuerung des Fahrzeugs eingegriffen werden. Bei einem niedrigsten Grad der Automatisierung kann ein Fahrer beim Führen des Fahrzeugs unterstützt werden, indem beispielsweise Informationen ausgegeben werden, beispielsweise ein Warnhinweis oder eine Freigabe, etwa bei einem Abbiegeassistenten. Bei einem höheren Grad der Automatisierung kann das Fahrerassistenzsystem Steuersignale erzeugen und an bestimmte Einrichtungen zum Beeinflussen der Steuerung des Fahrzeugs in Längs- und/oder Querrichtung übertragen. Beispielsweise kann eine automatische Beschleunigung oder Verzögerung des Fahrzeugs erfolgen oder es können Fahrmanöver mit automatischer Unterstützung durchgeführt werden. Bei einem maximalen Grad der Automatisierung wird das Fahrzeug vollständig automatisch gesteuert, das heißt, der Fahrer wird beim automatischen Befahren einer geplanten Trajektorie lediglich zur Überwachung der automatischen Fahrt benötigt und kann gegebenenfalls manuell eingreifen, etwa um Fehlfunktionen zu vermeiden.

Bei einer zumindest teilweise automatischen Fahrt kann die Passierbarkeits-Bewertung verwendet werden, um zu bestimmen, ob ein bestimmtes Fahrmanöver durchgeführt werden darf, wobei insbesondere eine automatisierte Durchführung nur dann erfolgt, wenn die Passierbarkeits-Bewertung eine sichere Passierbarkeit bestätigt. Dabei kann der Vertrauensparameter dazu verwendet werden, die Sicherheit der Bestimmung der Passierbarkeits-Bewertung zu beurteilen und beispielsweise zu erkennen, in welcher Situation ein Fahrer die automatische Bewertung der Passierbarkeit überprüfen sollte. Ferner können Situationen erkannt werden, in denen eine zumindest teilweise Rückgabe der Steuerung an den Fahrer erfolgen sollte.

Ferner kann vorgesehen sein, dass durch ein Fahrerassistenzsystem erkannt wird, welches Fahrmanöver ein Fahrer des Fahrzeugs vornehmen will, während die Steuerung des Fahrzeugs zumindest teilweise manuell erfolgt. Beispielsweise kann erkannt werden, wenn der Fahrer durch Auslösen des Blinkzeichens oder einen bestimmten Lenkeinschlag eine Intention zum Abbiegen zu erkennen gibt. Dabei können auch mehrere Fahrmanöver bestimmt werden, die für das Fahrzeug optional infrage kommen. Bei dem erfindungsgemäßen Verfahren können dann Passierbarkeits-Bewertungen für diese verschiedenen Fahrmanöver und gegebenenfalls alternative Fahrmanöver, die durch das Fahrerassistenzsystem bestimmt werden, erzeugt und ausgegeben werden.

Das erfindungsgemäße Fahrerassistenzsystem für ein Fahrzeug auf einer Straße umfasst eine Erfassungseinheit, durch die Umgebungsdaten über die Straße und über eine Umgebung des Fahrzeugs erfassbar sind, und eine Erkennungseinheit, durch die anhand der erfassten Umgebungsdaten zumindest eine Verkehrsregelung für einen in Fahrtrichtung vor dem Fahrzeug befindlichen Straßenabschnitt erfassbar ist. Es umfasst ferner eine Zuordnungseinheit, durch welche die erfasste Verkehrsregelung dem Fahrzeug zuordenbar ist, sowie eine Bewertungseinheit, durch die für den Straßenabschnitt anhand der dem Fahrzeug zugeordneten Verkehrsregelung eine Passierbarkeits-Bewertung erzeugbar und ausgebbar ist. Dabei ist die Passierbarkeits-Bewertung ferner anhand eines Vertrauensparameters erzeugbar, welcher anhand der erfassten Umgebungsdaten bestimmbar ist und ein Maß für eine Komplexität einer Regelungssituation für den Straßenabschnitt umfasst.

Das erfindungsgemäße Fahrerassistenzsystem ist insbesondere ausgebildet, das vorstehend beschriebene erfindungsgemäße Verfahren zu implementieren. Das Fahrerassistenzsystem weist somit dieselben Vorteile auf wie das erfindungsgemäße Verfahren.

Bei einer Ausbildung des erfindungsgemäßen Fahrerassistenzsystems ist die Passierbarkeits-Bewertung durch eine Steuerungseinheit empfangbar, wobei anhand der Passierbarkeits-Bewertung ein Steuersignal erzeugbar ist, in Abhängigkeit von dem eine zumindest teilweise automatische Fahrt des Fahrzeugs im Bereich des Fahrstraßenabschnitts durchführbar ist. Dadurch kann vorteilhafterweise eine besonders sichere automatische Steuerung des Fahrzeugs erfolgen.

Die Erfindung wird nun anhand von Ausführungsbeispielen mit Bezug zu den Zeichnungen erläutert.

Figuren 1A und 1B zeigen ein Ausführungsbeispiel des erfindungsgemäßen Fahrerassistenzsystems in einem Fahrzeug,
Figuren 2A, 2B und 2C zeigen verschiedene Verkehrssituationen, bei denen das erfindungsgemäße Verfahren angewandt werden kann,
Figuren 3A bis 3D zeigen ein Ausführungsbeispiel des erfindungsgemäßen Verfahrens und
Figuren 4A, 4B und 4C zeigen Ausführungsbeispiele einer konditionalen exponentiellen Mittelung.

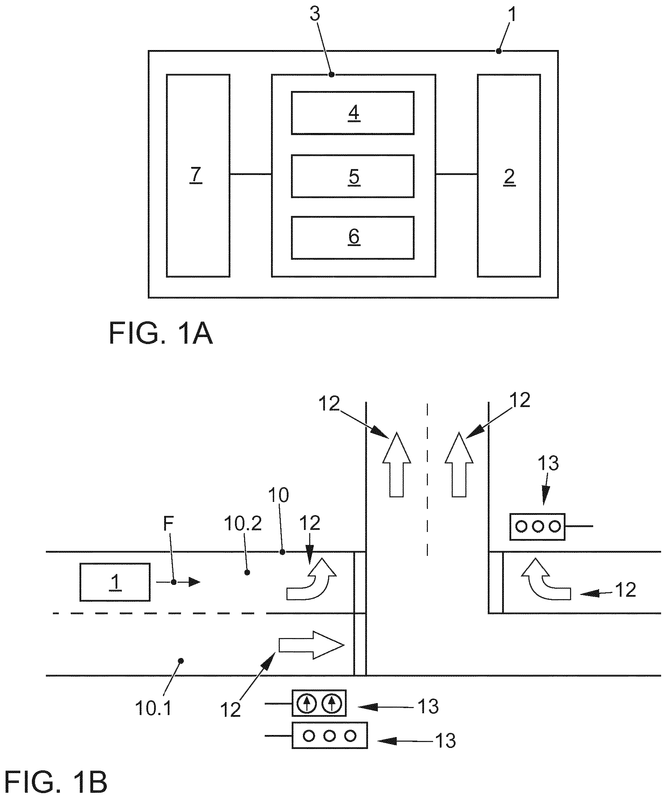

Mit Bezug zu den Figuren 1A und 1B wird ein Ausführungsbeispiel des erfindungsgemäßen Fahrerassistenzsystems in einem Fahrzeug erläutert.

Ein Fahrzeug 1 umfasst eine Erfassungseinheit 2 und eine Navigationseinheit 7, die beide mit einer Steuereinheit 3 gekoppelt sind. Die Steuereinheit umfasst ferner eine Erkennungseinheit 4, eine Zuordnungseinheit 5 und eine Bewertungseinheit 6.

Die Erfassungseinheit 2 umfasst bei dem Ausführungsbeispiel eine Kamera und einen Laserscanner sowie Schnittstellen zu weiteren Einheiten, insbesondere einer Einheit zum Abrufen von Informationen von einem nichtflüchtigen Datenspeicher. Ferner ist ein GPS-Modul umfasst, durch das eine Lokalisierung des Fahrzeugs 1 mittels eines globalen Navigationssatellitensystems erfolgen kann. Alternativ oder zusätzlich kann eine Lokalisierung mittels anderer Verfahren erfolgen, beispielsweise mittels Landmarken oder anderer Systeme.

Das Fahrzeug 1 befindet sich auf einer Straße 10 und bewegt sich in Fahrtrichtung F. Die Straße 10 weist zwei Fahrstreifen 10.1, 10.2 auf, wobei sich das Fahrzeug 1 auf dem Fahrstreifen 10.2 befindet. Die Straße 1 stößt bei einer Kreuzung auf eine weitere Straße. Die Straße 1 weist zudem Fahrbahnmarkierungen 12 auf, durch die ein erster Fahrstreifen 10.1 für die Geradeausfahrt freigegeben ist und ein zweiter Fahrstreifen 10.2 als Linksabbiegerspur 10.2 ausgezeichnet ist. Im Bereich der Kreuzung sind in Fahrtrichtung rechts am Rand der Straße 1 zwei Ampeln 13 angeordnet, wobei sich die eine Ampel 13 auf beide Fahrstreifen und die andere Ampel 13 auf die Linksabbiegerspur 10.2 bezieht.

Bei dem Ausführungsbeispiel ist vorgesehen, dass die Navigationseinheit 7 dazu eingerichtet ist, eine zumindest teilweise automatische Steuerung des Fahrzeugs 1 zu ermöglichen. Dies erfolgt auf an sich bekannte Weise, wobei insbesondere automatische Eingriffe in die Längs- und Quersteuerung des Fahrzeugs 1 vorgenommen werden. Beispielsweise kann das Fahrzeug 1 durch die automatische Steuerung beschleunigt oder abgebremst werden, es können Eingriffe in die Lenkung vorgenommen werden und/oder es können Ausgaben erzeugt werden, die den Fahrer des Fahrzeugs 1 über Maßnahmen zur Steuerung des Fahrzeugs 1 informieren.

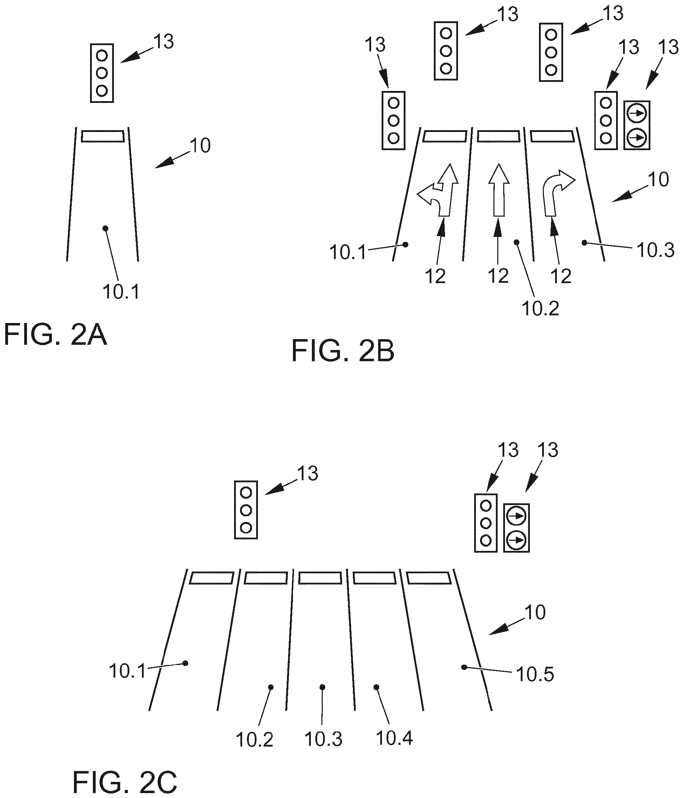

Mit Bezug zu den Figuren 2A, 2B und 2C werden verschiedene Verkehrssituationen erläutert, bei denen das erfindungsgemäße Verfahren angewandt werden kann. Dargestellt sind zur Vereinfachung jeweils Straßenabschnitte, die einen Bereich vor einer Haltelinie umfassen. Weitere Abschnitte der Straße sind hier nicht dargestellt und können auf verschiedene Weise gebildet sein, beispielsweise als Kreuzung, Fußgängerübergang oder in anderer Art.

Bei dem in Figur 2A gezeigten Fall umfasst die Straße 10 einen einzelnen Fahrstreifen 10.1, in deren Umfeld eine Ampel 13 angeordnet ist. Dieser Fall repräsentiert eine Regelungssituation geringer Komplexität, da die Ampel 13 dem Fahrstreifen 10.1 typischerweise eindeutig zugeordnet ist.

Bei dem in Figur 2B gezeigten Fall umfasst die Straße 10 drei Fahrstreifen 10.1, 10.2, 10.3, die ferner Fahrbahnmarkierungen 12 aufweisen, durch die jeweils ein Fahrstreifen 10.1, 10.2, 10.3 für Rechtsabbieger, für eine Geradeausfahrt oder für entweder eine Geradeausfahrt oder Linksabbieger ausgewiesen ist. In der Umgebung der Straße 10 sind fünf Ampeln 13 angeordnet. Vier der Ampeln 13 sind bei dem hier beispielhaft gezeigten Fall gleichartig ausgeführt und beziehen sich auf alle drei Fahrstreifen 10.1, 10.2, 10.3, während die fünfte Ampel 13 lediglich den nach rechts abbiegenden Verkehr regelt, welcher bei dem Ausführungsbeispiel auf den rechten Fahrstreifen 10.3 beschränkt ist.

Die Regelungssituation bei dem in Figur 2B gezeigten Fall ist komplexer als bei dem oben mit Bezug zu Figur 2A erläuterten Fall, da hier ein Fahrzeug, welches den Straßenabschnitt befahren soll und sich auf einem der drei Fahrstreifen 10.1, 10.2, 10.3 befindet, Signale von fünf Ampeln 13 erfassen kann und anschließend das aus der eigenen Perspektive relevante Signal erkennen muss. Dabei ist nicht unbedingt direkt ersichtlich, welche Ampel 13 für das Fahrzeug 1 auf einer einem der Fahrstreifen 10.1, 10.2, 10.3 relevant ist.

Bei dem in Figur 2C gezeigten Fall umfasst die Straße 10 fünf Fahrstreifen 10.1, 10.2, 10.3, 10.4, 10.5, in deren Umgebung drei Ampeln 13 angeordnet sind. Auch hier liegt eine komplexere Regelungssituation vor als oben bei dem mit Bezug zu Figur 2A erläuterten Fall, da für ein Fahrzeug, ähnlich wie bei dem oben mit Bezug zu Figur 2B erläuterten Fall, zunächst die eigene Position auf einem der fünf Fahrstreifen 10.1, 10.2, 10.3, 10.4, 10.5 erkannt werden muss und anschließend die für das Fahrzeug auf seinem Fahrstreifen relevanten Signale erkannt werden müssen.

In weiteren Ausführungsbeispielen sind alternativ oder zusätzlich zu den Ampeln 13 und den Fahrbahnmarkierungen 12 weitere Verkehrszeichen vorgesehen, die für die Zwecke der nachfolgenden Erläuterung des Ausführungsbeispiels in einer gemeinsamen Kategorie mit den Fahrbahnmarkierungen 12 behandelt werden. In weiteren Ausführungsbeispielen können weitere Kategorien von Verkehrsregelungseinrichtungen vorgesehen sein und auf unterschiedliche Weisen behandelt werden.

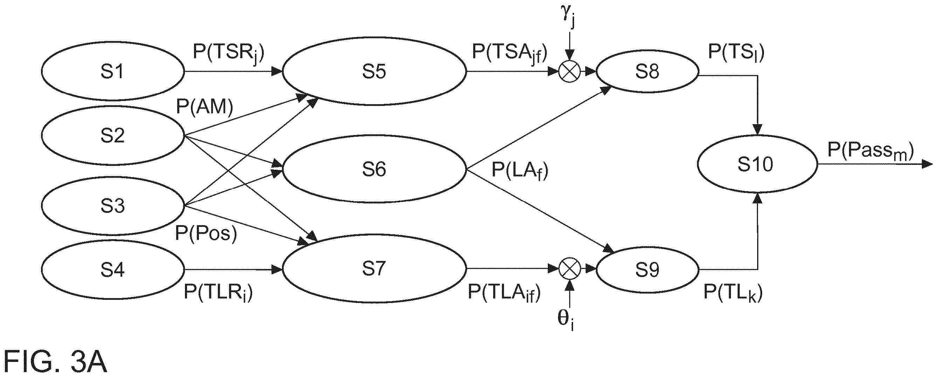

Mit Bezug zu den Figuren 3A bis 3D wird ein Ausführungsbeispiel des erfindungsgemäßen Verfahrens erläutert. Dabei wird insbesondere von dem oben mit Bezug zu den Figuren 1A und 1B erläuterten Ausführungsbeispiel des erfindungsgemäßen Fahrerassistenzsystems sowie von Verkehrssituationen ausgegangen, wie sie etwa oben mit Bezug zu den Figuren 2A, 2B und 2C erläutert sind.

Bei dem Ausführungsbeispiel wird von einer zumindest teilweise automatisierten Fahrt des Fahrzeugs 1 ausgegangen, wobei die Navigationseinheit 7 Steuersignal erzeugt, anhand derer einzelne Fahrmanöver automatisch durchgeführt werden. Der Fahrer des Fahrzeugs 1 behält dennoch die Verantwortung für die Fahrt und kann die Kontrolle jederzeit wieder vollständig übernehmen. In anderen Ausführungsbeispielen können andere Grade der Automatisierung vorgesehen sein, etwa eine vollautomatisierte Fahrt entlang einer vorgegebenen Route.

Um eine automatisierte Fahrt oder zumindest einzelne automatisierte Fahrmanöver durchzuführen, muss zunächst die Umgebung des Fahrzeugs erfasst werden. Anschließend wird das erfasste Szenario interpretiert und eine geeignete Strategie für die Fahrt bestimmt. Die Szenariointerpretation hat die Aufgabe, die für die Fahrsituation relevanten Informationen, insbesondere Verkehrsregelungen, zu erkennen, zu verarbeiten und zu interpretieren.

Beispielsweise kann die Passierbarkeit einer Kreuzung anhand dreier verschiedener Typen von Einrichtungen zur Verkehrsregelung vorgegeben werden: Mittels Verkehrszeichen, mittels Lichtsignalanlagen (Ampeln) oder ohne Verkehrszeichen, wobei in diesem Fall allgemeine Vorfahrtsregelungen gelten, etwa "Rechts vor Links". Zudem kann eine Verkehrsregelung durch eine Person vorgegeben werden, etwa mittels Handzeichen. Ein zentrales Problem der Bewertung einer Verkehrssituation an einer Kreuzung, insbesondere in einem urbanen Kontext, besteht also darin, die verschiedenen erkannten Ampelphasen und/oder Verkehrszeichen richtig zu interpretieren, um das Fahrverhalten des Fahrzeugs 1 und gegebenenfalls ein nachfolgend automatisch ausgeführtes Fahrmanöver zu planen.

Bei dem Ausführungsbeispiel des erfindungsgemäßen Verfahrens wird die Passierbarkeit anhand von Wahrscheinlichkeitsverteilungen für verschiedene Zustände bewertet. Es wird eine Passierbarkeits-Bewertung erzeugt, die anschließend verwendet werden kann, um ein geeignetes Fahrverhalten an einer urbanen Kreuzung automatisch zu bestimmen und auszuführen.

Bei dem Ausführungsbeispiel werden durch die Erfassungseinheit 2 des Fahrzeugs 1 Umgebungsdaten über eine Umgebung des Fahrzeugs 1 erfasst. Die Umgebungsdaten umfassen hier beispielhaft Straßendaten, Kartendaten, Ego-Positionsdaten und Verkehrsregelungsdaten. Die Umgebungsdaten werden bei dem Beispiel ferner so vorverarbeitet, dass anhand der Rohdaten eine Umfeldwahrnehmung bereitgestellt wird, wobei für einige relevante Elemente bereits eine Erkennung durchgeführt wurde.

In einem Schritt S1 wird eine Verkehrszeichenerkennung durchgeführt und in einem Schritt S4 eine Ampelerkennung. Auf diese Weise werden etwa Verkehrszeichen beziehungsweise Ampelphasen erkannt. Ferner werden in einem Schritt S2 Kartendaten und in einem Schritt S3 Daten über die Ego-Position des Fahrzeugs 1 erfasst. Anhand der im Schritt S3 erfassten Daten wird eine Schätzung der Ego-Position des Fahrzeugs 1 auf der Straße 10 erzeugt. Die im Schritt S2 erfassten Kartendaten können auf unterschiedliche Weise berücksichtigt werden, etwa um an einer bestimmten Position der Straße 10 die Anzahl der vorhandenen Fahrstreifen zu erfassen.

Bei weiteren Ausführungsbeispielen kann durch die Erfassungseinheit 2 eine direkte Kommunikation mit Verkehrsinfrastruktureinrichtungen erfolgen, insbesondere anhand einer *Car-to-X*-Kommunikation, durch die beispielsweise eine datentechnische Verbindung zu einer zentralen Einrichtung und/oder einer Lichtsignalanlage hergestellt wird und Daten über eine Verkehrsregelung an das Fahrzeug 1 übertragen werden. Das heißt, in diesem Fall können die Verkehrszeichenerkennung im Schritt S1 und die Ampelerkennung im Schritt S4 vereinfacht werden.

Zunächst wird bei dem Ausführungsbeispiel anhand der erfassten Umgebungsdaten eine Erkennung von Elementen der Verkehrsinfrastruktur in der Umgebung des Fahrzeugs vorgenommen, beziehungsweise für den Straßenabschnitt, für den eine Passierbarkeits-Bewertung erzeugt werden soll. Alternativ oder zusätzlich können andere Verfahrensschritte ausgeführt werden, um Informationen über die Verkehrssituation zu erfassen und auszuwerten.

Die in den Schritten S1 bis S4 erfassten und gegebenenfalls vorverarbeitet Daten weisen bestimmte Unsicherheiten auf, beispielsweise bedingt durch Ungenauigkeiten der verwendeten Sensoren der Erfassungseinheit 2, Ungenauigkeiten der erfassten Kartendaten und/oder bei Schritten zur Erkennung, insbesondere von Schildern und Ampeln 13. Bei dem in Figur 3A gezeigten Diagramm wird dies anhand von Wahrscheinlichkeitswerten angegeben, welche eine Unsicherheit der Verkehrszeichenerkennung $P(TSR_j)$ im Schritt S1, eine Unsicherheit des Kartenmaterials $P(AM)$ im Schritt S2, eine Unsicherheit bei der Bestimmung der Ego-Position $P(Pos)$ im Schritt S3 beziehungsweise eine Unsicherheit bei der Ampelerkennung $P(TLR_i)$ im Schritt S4 wiedergeben. Dabei bezieht sich der Index $i$ auf unterschiedliche Ampeln 13 und der Index $j$ auf unterschiedliche Fahrbahnmarkierungen 12 und Verkehrszeichen. Bei dem Ausführungsbeispiel wird davon ausgegangen, dass gegebenenfalls vorhandene Verkehrszeichen auf die gleiche Weise wie Fahrbahnmarkierungen 12 betrachtet werden.

Diese Wahrscheinlichkeiten werden berücksichtigt, um in den Schritten S5, S6 und S7 das Fahrzeug und die erfassten Verkehrsregelungen jeweils einzelnen Fahrstreifen zuzuordnen. Das heißt, es wird bestimmt, auf welchem Fahrstreifen 10.1, 10.2, 10.3, 10.4, 10.5 sich das Fahrzeug befindet und welche Verkehrsregelungen, die durch Fahrbahnmarkierungen 12, Verkehrszeichen oder Ampeln 13 signalisiert werden, für welchen Fahrstreifen 10.1, 10.2, 10.3, 10.4, 10.5 relevant sind.

In einem Schritt S5 werden Verkehrszeichen den Fahrstreifen zugeordnet, wobei die Ergebnisse der Verkehrszeichenerkennung (Schritt S1), der Erfassung der Kartendaten (Schritt S2) und der Erfassung der Ego-Position (Schritt S3) mit den jeweiligen Unsicherheiten $P(TSR_j)$, $P(AM)$ und $P(Pos)$ berücksichtigt werden. Für resultierende Zuordnung der Verkehrszeichen wird eine Unsicherheit bestimmt, die durch die Wahrscheinlichkeit $P(TSA_{jf})$ repräsentiert wird, wobei der Index $f$ für die einzelnen Fahrstreifen 10.1, 10.2, 10.3, 10.4, 10.5 der Straße 10 vorgesehen ist.

Auf ähnliche Weise erfolgt in einem Schritt S7 die Zuordnung der erfassten Ampeln 13 zu den Fahrstreifen 10.1, 10.2, 10.3, 10.4, 10.5, wobei die Ergebnisse der Ampelerkennung (Schritt S4), der Erfassung der Kartendaten (Schritt S2) und der Erfassung der Ego-Position (Schritt S3) mit den jeweiligen Unsicherheiten $P(TLR_i)$, $P(AM)$ und $P(Pos)$ berücksichtigt werden. Hierbei wird eine Wahrscheinlichkeit $P(TLA_{if})$ erzeugt.

Zudem wird in einem Schritt S6 das Fahrzeug 1 einer der Fahrstreifen 10.1, 10.2, 10.3, 10.4, 10.5 der Straße 10 zugeordnet, wobei in dem Ausführungsbeispiel die im Schritt S2 erfassten Kartendaten mit der Unsicherheit $P(AM)$ und die im Schritt S3 bestimmte Ego-Position mit der Unsicherheit $P(Pos)$ berücksichtigt werden, wobei für diesen Schritt eine Unsicherheit $P(LA_f)$ bestimmt wird.

Anschließend soll bei dem Ausführungsbeispiel bestimmt werden, welche Verkehrsregelungen für das Fahrzeug 1 relevant sind.

Dazu wird in einem Schritt S8 eine Zuordnung der erfassten Fahrbahnmarkierungen 12 und/oder Verkehrszeichen zu dem Fahrzeug 1 vorgenommen, wobei die im Schritt S6 bestimmte Zuordnung der Position des Fahrzeugs 1 zu den Fahrstreifen 10.1, 10.2, 10.3, 10.4, 10.5 und die im Schritt S5 bestimmte Zuordnung der Verkehrsregelungen zu den Fahrstreifen 10.1, 10.2, 10.3, 10.4, 10.5 mit den jeweiligen Wahrscheinlichkeiten $P(LA_f)$ und $P(TSA_{if})$ berücksichtigt werden.

Bei dem Ausführungsbeispiel des erfindungsgemäßen Verfahrens wird in diesem Schritt S8 ferner ein Vertrauensparameter $\gamma_j$ für die Zuordnung von Verkehrszeichen verwendet, der in Abhängigkeit von der Komplexität der Regelungssituation für den Straßenabschnitt, dessen Passierbarkeit bewertet werden soll, bestimmt wird. Dies erfolgt bei dem Ausführungsbeispiel mittels eines Maschinenlernverfahrens, wobei unterschiedliche an sich bekannte Verfahren verwendet werden können. Insbesondere kann eine *Support Vector Machine* (SVM, Stützvektormethode) verwendet werden. Durch ein Training anhand geeigneter Trainingsdaten, beispielsweise durch den Hersteller des Systems, wird ein Klassifikator trainiert. Alternativ oder zusätzlich kann ein anderes Maschinenlernverfahren genutzt werden, etwa ein neuronales Netz beziehungsweise ein künstliches neuronales Netz (KNN) oder ein anderes Maschinenlernverfahren.

Dies erlaubt es, anhand der erfassten Umgebungsdaten, für den Vertrauensparameter $\gamma_j$ einen Wert zu bestimmen, der insbesondere zwischen 0 und 1 liegt und angibt, mit welcher Wahrscheinlichkeit durch das System unter den gegebenen Umständen eine zuverlässige Zuordnung der Verkehrszeichen zu den Fahrstreifen 10.1, 10.2, 10.3, 10.4, 10.5 erreicht wird. Insbesondere wird dabei die Komplexität der vorliegenden Regelungssituation berücksichtigt, wobei insbesondere die Anzahl und Anordnung der Fahrstreifen 10.1, 10.2, 10.3, 10.4, 10.5 und/oder die Anzahl und Anordnung von Verkehrszeichen und Fahrbahnmarkierungen 12 einfließen. Alternativ oder zusätzlich können verschiedene Parameter verwendet werden, welche die Regelungssituation unabhängig von der Funktionsweise des eigentlichen Verfahrens zur Bestimmung der Passierbarkeits-Bewertung beschreiben, beispielsweise die Anzahl der erkannten Ampeln 13, die Anzahl der Fahrstreifen 10.1, 10.2, 10.3, 10.4, 10.5, der laterale Abstand der erkannten Ampeln 13 zur Mitte der verschiedenen Fahrstreifen 10.1, 10.2, 10.3, 10.4, 10.5, Abstand des Fahrzeugs 1 zu den Ampeln 13 und so weiter

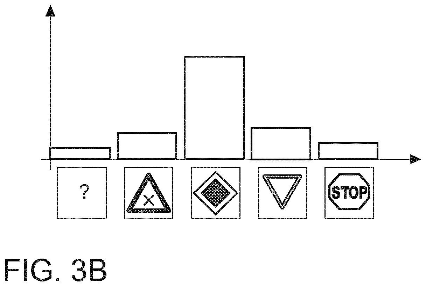

Die im Schritt S8 bestimmte Zuordnung der Verkehrszeichen zu dem Fahrzeug 1 ist mit einer Wahrscheinlichkeit $P(TS_l)$ verbunden, die ebenfalls bestimmt wird und deren Index *l* für verschiedene Kategorien von Verkehrszeichen steht. Das heißt, es wird eine Wahrscheinlichkeitsverteilung bestimmt, die angibt, mit welcher Wahrscheinlichkeit ein Verkehrszeichen einer bestimmten Kategorie dem Fahrzeug zugeordnet wurde. Ein Beispiel einer solchen Wahrscheinlichkeitsverteilung ist in Figur 3B gezeigt, wobei für verschiedene Arten von Verkehrszeichen jeweils eine bestimmte Wahrscheinlichkeit als Balkendiagramm dargestellt ist. Bei dem Beispiel werden etwa die folgenden Zustände berücksichtigt: "Kein Verkehrszeichen erkannt ", "rechts vor links", "Vorfahrtstraße", "Vorfahrt gewähren", "Stoppschild". Äquivalente Verkehrsregelungen sind jeweils von den Kategorien mit umfasst.

Diese Wahrscheinlichkeitsverteilung $P(TS_l)$ kann bei dem Ausführungsbeispiel also in folgender Weise als Produkt der konditionalen Wahrscheinlichkeiten der oben erläuterten Zwischenschritte ausgedrückt werden:

$$P(TS_l) = P(TS_l|LA_f, TSA_{if}) \cdot P(LA_f|Pos, AM) \cdot P(TSA_{if}|AM, Pos, TSR_j) \cdot \gamma_j \cdot P(TSR_j) \cdot P(Pos) \cdot P(AM)$$

Dabei bezeichnet:

$P(TS_l)$ die Wahrscheinlichkeit, dass ein Verkehrszeichen der Kategorie *l* für das Fahrzeug zu beachten ist;

$P(TS_l|LA_f, TSA_{if})$ die konditionale Wahrscheinlichkeit für ein Verkehrszeichen der Kategorie *l* mit der Zuordnung des Fahrzeugs 1 zu einem Fahrstreifen *f* und eine Zuordnung des Verkehrszeichens *j* zu dem Fahrstreifen *f*;

$P(LA_f|Pos, AM)$ die konditionale Wahrscheinlichkeit für die Zuordnung des Fahrzeugs 1 zu einem Fahrstreifen *f* mit den Wahrscheinlichkeiten für die Bestimmung der Ego-Position und für die erfassten Kartendaten;

$P(TSA_{if}|AM, Pos, TSR_j)$ die konditionale Wahrscheinlichkeit für die Zuordnung des Verkehrszeichens *j* zu der Fahrspur *f* mit den Wahrscheinlichkeiten für die erfassten Kartendaten, die Bestimmung der Ego-Position und der Erkennung des Verkehrszeichens *j*;

$\gamma_j$ den Vertrauensparameter für die Zuordnung des Verkehrszeichens *j* zum Fahrzeug 1;

$P(TSR_j)$ die Wahrscheinlichkeit der Erkennung des Verkehrszeichens *j* aus Schritt S1;

P(*Pos*) die Wahrscheinlichkeit der Bestimmung der Ego-Position aus Schritt S3; und
P(*AM*) die Wahrscheinlichkeit der erfassten Kartendaten aus Schritt S2.

Analog dazu erfolgt in einem Schritt S9 eine Zuordnung der erfassten Ampeln 13 zu dem Fahrzeug 1, wobei die im Schritt S6 bestimmten Zuordnung der Position des Fahrzeugs 1 zu den Fahrstreifen 10.1, 10.2, 10.3, 10.4, 10.5 und die im Schritt S7 bestimmte Zuordnung der Ampeln 13 zu den Fahrstreifen 10.1, 10.2, 10.3, 10.4, 10.5 mit den jeweiligen Wahrscheinlichkeiten $P(LA_f)$ und $P(TLA_{if})$ berücksichtigt werden.

Statt des Vertrauensparameters $\gamma_j$ für die Zuordnung von Verkehrszeichen wird hier ein Vertrauensparameter $\theta_i$ für die Zuordnung von Ampeln 13 verwendet, welcher auf prinzipiell die gleiche Weise bestimmt wird wie oben beschrieben. Auch hier kann eine SVM verwendet werden, die anhand geeigneter Daten trainiert wird, insbesondere durch den Hersteller des Systems, und die insbesondere dazu eingerichtet ist, einen Wert zwischen 0 und 1 zu bestimmen, welcher eine Wahrscheinlichkeit dafür angibt, dass durch das System unter den gegebenen Umständen eine zuverlässige Zuordnung der Ampeln 13 zu den Fahrstreifen 10.1, 10.2, 10.3, 10.4, 10.5 erreicht wird. Wie oben erläutert, wird auch hier insbesondere die Komplexität der vorliegenden Regelungssituation berücksichtigt. Auch hier kann alternativ oder zusätzlich ein anderes Maschinenlernverfahren genutzt werden, etwa ein neuronales Netz beziehungsweise ein künstliches neuronales Netz (KNN) oder ein anderes Maschinenlernverfahren.

Analog zum Schritt S8 wird für die im Schritt des neuen bestimmte Zuordnung der Ampeln 13 zu dem Fahrzeug 1 eine dem Fahrzeug 1 zugeordnete Wahrscheinlichkeit $P(TL_k)$ bestimmt, deren Index $k$ für verschiedene Ampelzustände steht. Die Ampelzustände werden anhand der Ampelphasen bestimmt und bezeichnen verschiedene Verkehrsregelungen, denen nicht unbedingt eine eindeutige Ampelphase zugeordnet sein kann. Unterschiedliche Ampelphasen können der gleichen Verkehrsregelung zugeordnet sein, durch welche die Passierbarkeit einer Kreuzung klassifiziert wird. Beispielsweise kann ein grünes Ampelsignal oder eine grüne Ampel mit einer Pfeildarstellung vorgesehen sein, wobei beide Alternativen bedeuten, dass die Durchfahrt für das Fahrzeug erlaubt ist. In einem solchen Fall ist also die konkrete Ampelphase weniger relevant als der daraus resultierende Ampelzustand, um zu entscheiden, ob das Fahrzeug ein bestimmtes Fahrmanöver ausführen darf.

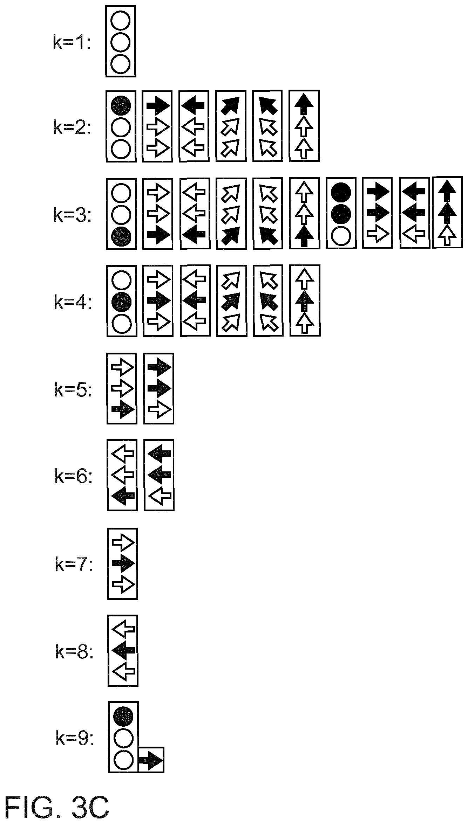

Figur 3C zeigt Beispiele der Zuordnung verschiedener Ampelphasen zu verschiedenen mit $k$ bezeichneten Ampelzuständen. Die dargestellte Übersicht ist beispielhaft zu verstehen und stellt keinen Anspruch auf Vollständigkeit oder verkehrsrechtliche Korrektheit. Gezeigt sind Ampeln mit jeweils drei Leuchtflächen, die rot (obere Leuchtfläche), gelb (Mitte) und/oder grün (unten) leuchten können. Die Leuchtflächen können ferner rund oder in einer Pfeilform ausgebildet sein, wobei die Pfeilformen nach vorne (beziehungsweise oben), rechts, links, schräg rechts oder schräg links zeigen können. In der Zeichnung sind nicht aktivierte, das heißt dunkle, Leuchtflächen durch ungefüllte Umrisse angedeutet, während aktivierte, das heißt leuchtende, Leuchtflächen als gefüllte Umrisse gezeigt sind. Selbstverständlich können auch Lichtsignalanlagen mit lediglich zwei oder einer Leuchtfläche vorgesehen sein, die Leuchtflächen können auf unterschiedliche Weisen zueinander angeordnet sein, die Formen der Leuchtflächen können auf andere Weisen ausgebildet sein und so weiter. Ferner können zeitlich veränderliche Lichtsignale als eigene Ampelphase berücksichtigt und einem Ampelzustand zugeordnet werden, insbesondere eine blinkende gelbe Leuchtfläche.

Bei der in Figur 3C gezeigten Übersicht entspricht $k=1$ einem Ampelzustand, bei dem die Ampel deaktiviert, insbesondere ausgeschaltet ist. Die für $k=2$ gezeigten Ampelphasen weisen eine rot leuchtende Leuchtfläche der Ampel auf, während die weiteren Leuchtflächen deaktiviert sind, und sind einem Ampelzustand zugeordnet, bei dem eine Einfahrt in die Kreuzung nicht erlaubt ist. Die $k=3$ zugeordneten Ampelphasen mit einer grün leuchtenden Leuchtfläche oder gleichzeitig leuchtenden roten und gelben Leuchtflächen sind einem Ampelzustand zugeordnet, bei dem die Einfahrt in die Kreuzung erlaubt ist. Ampelphasen, bei denen lediglich die gelbe Leuchtfläche aktiviert ist, sind in der Übersicht $k=4$ zugeordnet und somit einem Ampelzustand, bei dem die Einfahrt in die Kreuzung für eine begrenzte Zeit erlaubt ist. Dem Ampelzustand $k=5$ sind Ampelphasen zugeordnet, bei denen die Erlaubnis rechts abzubiegen durch einen grün aufleuchtenden Pfeil oder gleichzeitig auf leuchtende Pfeile in Rot und Gelb signalisiert wird. Der Ampelzustand $k=6$ ist analog zu $k=5$ gebildet und umfasst die Erlaubnis, links abzubiegen. Analog zu den Ampelzuständen $k=5$ und $k=6$ umfassen die dem Ampelzustand $k=7$ und $k=8$ zugeordneten Ampelphasen jeweils einen gelb leuchtenden Pfeil nach rechts beziehungsweise nach links und signalisieren die zeitlich begrenzte Erlaubnis, in die jeweilige Richtung abzubiegen. Dem Ampelzustand $k=9$ in der Übersicht ist eine Ampelphase zugeordnet, bei der ein dauerhaft grüner Pfeil nach rechts bei einer rot aufleuchtenden Ampel angeordnet ist, was einer bedingten Erlaubnis entspricht, rechts abzubiegen.

Alternativ oder zusätzlich können unterschiedliche weitere Ampelzustände auf andere Weise definiert sein, wie etwa "Ampelzustand nicht erkannt", "Ampel aus", "Einfahren nicht erlaubt", "Einfahren erlaubt", "Verträgliches Abbiegen", "Bedingt verträgliches Abbiegen", "Verträgliches Links-/Rechtsabbiegen bei roter Ampel" (etwa: Ampel mit grünem Pfeil), wobei alternativ oder zusätzlich weitere Ampelzustände definiert sein können.

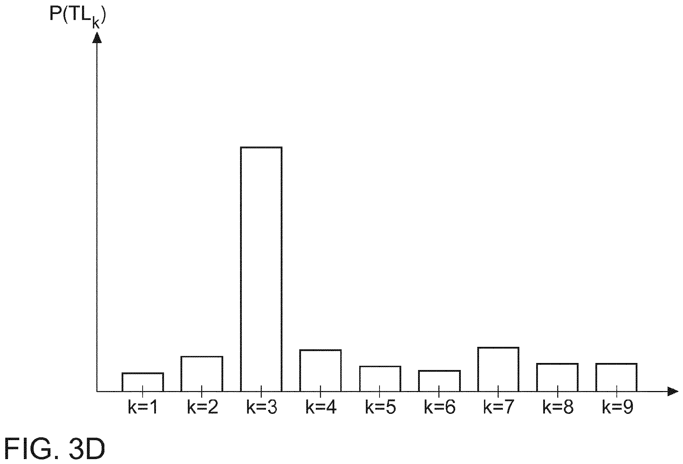

Es wird eine Wahrscheinlichkeitsverteilung erzeugt, die analog zu der in Figur 3B dargestellten Verteilung erzeugt wird und die Wahrscheinlichkeiten für die verschiedenen mit $k$ bezeichneten Ampelzustände angibt. Eine solche Wahrscheinlichkeitsverteilung ist in Figur 3D beispielhaft dargestellt, wobei entlang der X-Achse die Werte für $k$ und entlang der Y-Achse die jeweils zugeordneten Wahrscheinlichkeiten $P(TL_k)$ aufgetragen sind. Bei dem hier dargestellten Ausführungsbeispiel wird ein Maximum für $k$=3 ermittelt, das heißt, die detektierte Ampelphase zeigt mit der höchsten Wahrscheinlichkeit an, dass eine Einfahrt in die Kreuzung erlaubt ist. Diese Wahrscheinlichkeitsverteilung $P(TL_k)$ kann bei dem Ausführungsbeispiel also in folgender Weise als Produkt der konditionalen Wahrscheinlichkeiten der oben erläuterten Zwischenschritte ausgedrückt werden:

$$P(TL_k) = P(TL_k|LA_f, TLA_{if}) \cdot P(LA_f|Pos, AM) \cdot P(TLA_{if}|AM, Pos, TLR_i) \cdot \theta_i \cdot P(TLR_i) \cdot P(Pos) \cdot P(AM)$$

Dabei bezeichnet:

$P(TL_k)$ die Wahrscheinlichkeit, dass der Ampelzustand $k$ für das Fahrzeug 1 zu beachten ist;
$P(TL_k|LA_f, TLA_{if})$ die konditionale Wahrscheinlichkeit für den Ampelzustand $k$ mit der Zuordnung des Fahrzeugs 1 zu einem Fahrstreifen $f$ und eine Zuordnung der Ampel $i$ zu dem Fahrstreifen $f$;
$P(LA_f|Pos, AM)$ die konditionale Wahrscheinlichkeit für die Zuordnung des Fahrzeugs 1 zu einem Fahrstreifen $f$ mit den Wahrscheinlichkeiten für die Bestimmung der Ego-Position und für die erfassten Kartendaten;
$P(TLA_{if}|AM, Pos, TLR_i)$ die konditionale Wahrscheinlichkeit für die Zuordnung der Ampel $i$ zu der Fahrspur $f$ mit den Wahrscheinlichkeiten für die erfassten Kartendaten, die Bestimmung der Ego-Position und der Erkennung der Ampel $i$;
$\theta_i$ den Vertrauensfaktor für die Zuordnung der Ampel $i$ zum Fahrzeug 1;
$P(TLR_i)$ die Wahrscheinlichkeit der Erkennung der Ampel $i$ aus Schritt S4;
$P(Pos)$ die Wahrscheinlichkeit der Bestimmung der Ego-Position aus Schritt S3; und
$P(AM)$ die Wahrscheinlichkeit der Bestimmung der erfassten Kartendaten aus Schritt S2.

Bei weiteren Ausführungsbeispielen kann die Erzeugung der Vertrauensfaktoren $\gamma_j$, $\theta_i$ auf andere Weise erfolgen. Insbesondere können Vertrauensfaktoren $\gamma_j$, $\theta_i$ für unterschiedliche Bedingungen fest vorgegeben sein, beispielsweise für bestimmte Kategorien von bekannten Verkehrszeichen, für eine bestimmte Anzahl Fahrstreifen 10.1, 10.2, 10.3, 10.4, 10.5, Verkehrszeichen, Fahrbahnmarkierungen 12 und/oder Ampeln 13 oder für ein bestimmtes Verhältnis der Anzahlen von Fahrstreifen 10.1, 10.2, 10.3, 10.4, 10.5 und Verkehrsregelungseinrichtungen zueinander oder für einen bestimmten Straßenabschnitt.

In einem weiteren Schritt S10 wird anhand der zuvor bestimmten Wahrscheinlichkeiten beziehungsweise Wascheinigkeitsverteilungen eine Passierbarkeits-Bewertung für den Straßenabschnitt erzeugt. Bei dem Ausführungsbeispiel erfolgt eine Ausgabe der Passierbarkeits-Bewertung, indem ein Signal an die Navigationseinheit 7 übertragen wird, welche ein für die Situation sicheres Fahrmanöver, insbesondere eine Solltrajektorie des Fahrzeugs 1, bestimmt und Steuerungssignale so erzeugt, dass die Längs- und Querführung des Fahrzeugs entsprechend angesteuert wird.

Bei dem Ausführungsbeispiel ist vorgesehen, dass als Passierbarkeits-Bewertung eine Wahrscheinlichkeit $P(Pass_m)$ für bestimmte Zustände $m$ der Passierbarkeit bestimmt wird, das heißt, es wird eine Passierbarkeits-Wahrscheinlichkeitsverteilung bestimmt. Es wird eine vorgegebene Menge verschiedener Zustände der Passierbarkeit betrachtet und ihre Wahrscheinlichkeit wird berechnet. Beispielsweise kann die Navigationseinheit 7 solche Zustände vorgeben, die für eine Routenführung und/oder eine zumindest teilweise automatische Fahrt entlang der bestimmten Route relevant sind.

Die Bestimmung der Passierbarkeits-Bewertung kann auf verschiedene Weise erfolgen, beispielsweise mittels eines *Fuzzy-Logic*-Verfahrens, eines regelbasierten Verfahrens oder auf eine andere Art. In weiteren Ausführungsbeispielen können zudem weitere Daten erfasst und berücksichtigt werden, zum Beispiel Vorgaben für einen besonderen Straßenabschnitt.

Insbesondere ist eine Normierung vorgesehen, das heißt, die Summe sämtlicher $m$ Wahrscheinlichkeiten $P(Pass_m)$ beträgt 1. Zudem sind die Wahrscheinlichkeitsverteilungen für mögliche Ampelzustände $k$ und die möglichen Verkehrsschilder $l$ normiert.

Die Passierbarkeits-Bewertung wird erfindungsgemäß ausgegeben, wobei bei dem Ausführungsbeispiel eine Übertragung an die Navigationseinheit 7 vorgesehen ist. Die Passierbarkeits-Wertung wird bei der Ausführung von Fahrmanövern 3 einer zumindest teilweise automatischen Steuerung des Fahrzeugs 1 berücksichtigt. Dazu wird anhand der Passierbarkeits-Bewertung ein Freigabesignal erzeugt, welches Informationen darüber umfasst, ob das Fahrmanöver sicher durchgeführt werden kann oder nicht.

Das erfindungsgemäße Verfahren kann für Ampeln und/oder Verkehrszeichen ausgeführt werden sowie alternativ oder zusätzlich in analoger Weise für verschiedenste Arten von Verkehrsregelungen, beispielsweise auch für Fahrbahnmarkierungen, Verkehrszeichen an Baustellen oder ähnliche Regelungen.

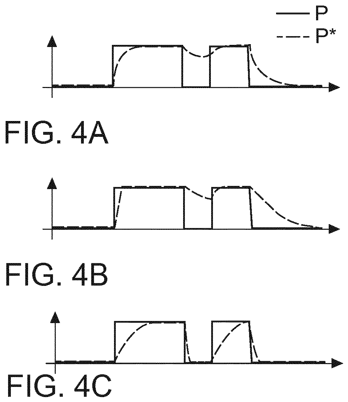

Mit Bezug zu den Figuren 4A, 4B und 4C werden Beispiele einer konditionalen exponentiellen Mittelung erläutert, die bei den vorstehenden Ausführungsbeispielen eingesetzt werden können.

Um eine richtige Interpretation zeitlicher Veränderungen innerhalb der erfassten Umgebungsdaten zu gewährleisten, wird eine Glättung der erfassten Wahrscheinlichkeiten durchgeführt. Beispielsweise können temporäre Schwankungen bei der Erkennung oder Zuordnung eines Verkehrsschildes, eines Ampelzustands oder eines Fahrstreifens auftreten, etwa bei einer zeitweisen Verdeckung durch andere Verkehrsteilnehmer oder weitere Effekte.

Die in den Figuren 4A bis 4C dargestellte durchgezogene Linie stellt die für einen bestimmten Ampelzustand bestimmte Wahrscheinlichkeit P in Abhängigkeit von der Zeit dar. Die Wahrscheinlichkeit beträgt in diesem vereinfachten Beispiel zunächst 0, springt dann auf 1, nimmt kurzzeitig den Wert 0 und wieder 1 an und fällt zum Ende des dargestellten Bereichs auf 0. Beispielsweise ist eine rote Ampel zu Beginn des betrachteten Zeitintervalls nicht sichtbar, wird dann erkannt, wird anschließend kurzzeitig von einem anderen Fahrzeug verdeckt und wird zum Ende, etwa nach dem Umschalten der Ampel auf ein grünes Signal, nicht mehr registriert.

Die in Figur 4A gezeigte gestrichelte Linie zeigt das Ergebnis P* einer exponentiellen Mittelung (*Exponential Moving Average*; EMA), wobei ein Glättungsparameter $\propto$ einen Wert zwischen 0 und 1 einnimmt und den Grad der Glättung bestimmt:

$$P^*(A_k\,,\,n) = P(A_k\,,\,n) \cdot (1-\propto) + P(A_k\,,\,n-1) \cdot\,\propto$$

Dabei bezeichnet $P^*(A_{k,}\,n)$ die geglättete Wahrscheinlichkeit $P(A_{k,}\,n)$ ein bestimmtes Ampelsignal $A_k$ für die entlang der Abszisse aufgetragenen Zeitpunkte *n*.

Bei dem Ausführungsbeispiel ist vorgesehen, dass der Wert von $\propto$ nicht konstant gewählt wird, sondern von bestimmten Bedingungen abhängt, etwa für verschiedene Ampelzustände oder Verkehrszeichen.

Insbesondere ist eine konditionale oder bedingte exponentielle Mittelung (*Conditional Exponential Moving Average*; cEMA) vorgesehen, wobei der Glättungsparameter $\propto$ in Abhängigkeit davon gewählt wird, ob der zu glättende Wert abnimmt ($\propto_{ab}$) oder zunimmt ($\propto_{zu}$). Je nachdem ob der Glättungsparameter für den zunehmenden Wert ($\propto_{zu}$) größer oder kleiner ist als der Glättungsparameter für den abnehmenden Wert ($\propto_{ab}$), kann eine konservative exponentielle Mittelung ($\propto_{zu}<\propto_{ab}$) oder eine nicht-konservative exponentielle Mittelung ($\propto_{ab}<\propto_{zu}$) erreicht werden.

Bei dem in Figur 4B gezeigten Fall (siehe gestrichelte Linie) wird eine konservative exponentielle Mittelung vorgenommen, bei der eine Abnahme des Werts verlangsamt wird, sodass etwa die kurzzeitige Abnahme auf 0 weniger deutlich wird. Bei dem in Figur 4C gezeigten Fall (siehe gestrichelte Linie) wird dagegen eine nicht-konservative exponentielle Mittelung vorgenommen, wobei umgekehrt eine Zunahme des Werts verlangsamt wird und bei dem Beispiel die kurzzeitige Abnahme auf 0 sehr deutlich erhalten bleibt.

Der Glättungsparameter $\propto$ kann auf verschiedene Weisen gebildet werden, etwa in Abhängigkeit davon, für welchen Ampelzustand die Wahrscheinlichkeit geglättet werden soll. Beispielweise kann eine konservative Glättung für besonders kritische Signale gewählt werden, etwa ein erkanntes Verbot, in die Kreuzung einzufahren, etwa bei einer roten Ampel oder einem Stoppschild. Dagegen kann eine nicht-konservative Glättung für Signale gewählt werden, die im Zweifelsfall zurückhaltend bewertet werden, etwa bei einer erkannten Erlaubnis, in die Kreuzung einzufahren, etwa bei einer grünen Ampel oder einem Schild "Vorfahrtsstraße".

**Bezugszeichenliste**

| | |
|---|---|
| 1 | Fahrzeug |
| 2 | Erfassungseinheit |
| 3 | Steuereinheit |
| 4 | Erkennungseinheit |
| 5 | Zuordnungseinheit |
| 6 | Bewertungseinheit |
| 7 | Navigationseinheit |
| 10 | Straße |
| 10.1, 10.2, 10.3, 10.4, 10.5 | Weitere Fahrstreifen |
| 12 | Fahrbahnmarkierung |
| 13 | Lichtsignalanlage, Ampel |
| α | Glättungsparameter |
| $\gamma_j$ | Vertrauensparameter (Verkehrszeichen) |
| $\theta_i$ | Vertrauensparameter (Ampel) |
| F | Fahrtrichtung |
| S1 | Verkehrszeichenerkennung |
| S2 | Erfassung von Kartendaten |
| S3 | Erfassen einer Ego-Position |

| S4 | Ampelerkennung |
|---|---|
| S5 | Zuordnung Verkehrszeichen - Fahrstreifen |
| S6 | Zuordnung Fahrzeug - Fahrstreifen |
| S7 | Zuordnung Ampel - Fahrstreifen |
| S8 | Interpretation relevantes Verkehrszeichen |
| S9 | Interpretationen relevante Ampel |
| S10 | Erzeugung Passierbarkeits-Bewertung |

**Patentansprüche**

1. Verfahren zum Betreiben eines Fahrerassistenzsystems für ein Fahrzeug (1) auf einer Straße (10), bei dem

   Umgebungsdaten über die Straße (10) und über eine Umgebung des Fahrzeugs (1) erfasst werden; wobei die erfassten Umgebungsdaten Straßendaten über den Verlauf des in Fahrtrichtung (F) vor dem Fahrzeug (1) befindlichen Abschnitts der Straße 18) über einen oder mehrere Fahrstreifen (10.1, 10.2, 10.3, 10.4, 10.5) der Straße (10) sowie über Verkehrsregelungseinrichtungen (12, 13) umfassen;
   anhand der erfassten Umgebungsdaten zumindest eine Verkehrsregelung für einen in Fahrtrichtung (F) vor dem Fahrzeug (1) befindlichen Straßenabschnitt erfasst und dem Fahrzeug (1) zugeordnet wird; sowie
   für den Straßenabschnitt anhand der dem Fahrzeug (1) zugeordneten Verkehrsregelung eine Passierbarkeits-Bewertung erzeugt und ausgegeben wird; **dadurch gekennzeichnet, dass**
   die Passierbarkeits-Bewertung ferner anhand eines Vertrauensparameters ($\gamma_j$, $\theta_i$) erzeugt wird, welcher anhand der erfassten Umgebungsdaten bestimmt wird und ein Maß für eine Komplexität einer Regelungssituation für den Straßenabschnitt umfasst; wobei
   der Vertrauensparameter ohne die konkrete Bestimmung einer Zuordnung der Verkehrsregelung zu dem Fahrzeug bestimmt wird; wobei
   der Vertrauensparameter ($\gamma_j$, $\theta_i$) abnimmt bei einer zunehmenden Anzahl von Kombinationsmöglichkeiten, in denen die Verkehrsregelungseinrichtungen (12, 13) den Fahrstreifen (10.1, 10.2, 10.3, 10.4, 10.5) der Straße (10) zugeordnet werden können.

2. Verfahren gemäß einem der vorhergehenden Ansprüche,
   **dadurch gekennzeichnet, dass**
   ferner Kartendaten über die Straße (10) in der Umgebung des Fahrzeugs (1) erfasst werden; wobei die Kartendaten Informationen über eine Anzahl der Fahrstreifen (10.1, 10.2, 10.3, 10.4, 10.5) der Straße (10), die Position von Kreuzungen und/oder die Position von Verkehrsregelungseinrichtungen (12, 13) umfassen.

3. Verfahren gemäß einem der vorhergehenden Ansprüche,
   **dadurch gekennzeichnet, dass**
   die erfassten Umgebungsdaten Ego-Positionsdaten umfassen; und anhand der Ego-Positionsdaten eine Ego-Positions-Wahrscheinlichkeitsverteilung für die Ego-Position des Fahrzeugs (1) bestimmt wird.

4. Verfahren gemäß Anspruch 3,
   **dadurch gekennzeichnet, dass**
   die Straße (10) zumindest zwei Fahrstreifen (10.1, 10.2, 10.3, 10.4, 10.5) aufweist und die Ego-Positions-Wahrscheinlichkeitsverteilung relativ zu den Fahrstreifen (10.1, 10.2, 10.3, 10.4, 10.5) der Straße (10) bestimmt wird.

5. Verfahren gemäß Anspruch 3 oder 4,
   **dadurch gekennzeichnet, dass**
   die Zuordnung der erfassten Verkehrsregelung zu dem Fahrzeug (1) anhand der Ego-Positions-Wahrscheinlichkeitsverteilung erfolgt.

6. Verfahren gemäß einem der vorhergehenden Ansprüche,
   **dadurch gekennzeichnet, dass**
   die erfassten Umgebungsdaten Verkehrsregelungsdaten umfassen; und zum Erfassen der Verkehrsregelung anhand der Verkehrsregelungsdaten eine Verkehrsregelungs-Wahrscheinlichkeitsverteilung für eine Vielzahl vorgegebener Verkehrsregelungskategorien bestimmt wird.

7. Verfahren gemäß einem der vorhergehenden Ansprüche,
   **dadurch gekennzeichnet, dass**

anhand der erfassten Umgebungsdaten eine Zuordnungs-Wahrscheinlichkeitsverteilung für eine Zuordnung von Verkehrsregelungseinrichtungen (12, 13) zu dem Fahrzeug (1) bestimmt wird.

8. Verfahren gemäß einem der vorhergehenden Ansprüche,
**dadurch gekennzeichnet, dass**
die Passierbarkeits-Bewertung eine Passierbarkeits-Wahrscheinlichkeitsverteilung umfasst.

9. Verfahren gemäß einem der Ansprüche 3 bis 8,
**dadurch gekennzeichnet, dass**
für zumindest eine der bestimmten Wahrscheinlichkeitsverteilungen eine zeitliche Glättung anhand eines Glättungs-parameters ($\alpha$) durchgeführt wird, wobei bevorzugt eine exponentielle gleitende Mittelung, besonders bevorzugt eine konditionale gleitende exponentielle Mittelung durchgeführt wird.

10. Verfahren gemäß Anspruch 9,
**dadurch gekennzeichnet, dass**
anhand der erfassten Umgebungsdaten ein Überquerungszustand bestimmt wird; und der Glättungsparameter ($\alpha$) in Abhängigkeit von dem Überquerungszustand bestimmt wird.

11. Verfahren gemäß einem der vorhergehenden Ansprüche,
**dadurch gekennzeichnet, dass**
der Vertrauensparameter ($\gamma_j$, $\theta_i$) mittels eines Maschinenlernverfahrens bestimmt wird.

12. Verfahren gemäß einem der vorhergehenden Ansprüche,
**dadurch gekennzeichnet, dass**
die Passierbarkeits-Bewertung für eine vorgegebene Menge von Fahrmanövern erzeugt wird.

13. Fahrerassistenzsystem für ein Fahrzeug (1) auf einer Straße (10), umfassend

eine Erfassungseinheit (2), durch die Umgebungsdaten über die Straße (10) und über eine Umgebung des Fahrzeugs (1) erfassbar sind; wobei
die erfassten Umgebungsdaten Straßendaten über den Verlauf des in Fahrtrichtung (F) vor dem Fahrzeug (1) befindlichen Abschnitts der Straße 18) über einen oder mehrere Fahrstreifen (10.1, 10.2, 10.3, 10.4, 10.5) der Straße (10) sowie über Verkehrsregelungseinrichtungen (12, 13) umfassen;
eine Erkennungseinheit (4), durch die anhand der erfassten Umgebungsdaten zumindest eine Verkehrsregelung für einen in Fahrtrichtung vor dem Fahrzeug (1) befindlichen Straßenabschnitt (11) erfassbar ist;
eine Zuordnungseinheit (5), durch welche die erfasste Verkehrsregelung dem Fahrzeug zuordenbar ist; sowie
eine Bewertungseinheit (6), durch die für den Straßenabschnitt anhand der dem Fahrzeug zugeordneten Verkehrsregelung eine Passierbarkeits-Bewertung erzeugbar und ausgebbar ist;
**dadurch gekennzeichnet, dass**
die Passierbarkeits-Bewertung ferner anhand eines Vertrauensparameters ($\gamma_j$, $\theta_i$) erzeugbar ist, welcher anhand der erfassten Umgebungsdaten bestimmbar ist und ein Maß für eine Komplexität einer Regelungssituation für den Straßenabschnitt umfasst; wobei
der Vertrauensparameter ohne die konkrete Bestimmung einer Zuordnung der Verkehrsregelung zu dem Fahrzeug bestimmbar ist.; wobei
der Vertrauensparameter ($\gamma_j$, $\theta_i$) abnimmt bei einer zunehmenden Anzahl von Kombinationsmöglichkeiten, in denen die Verkehrsregelungseinrichtungen (12, 13) den Fahrstreifen (10.1, 10.2, 10.3, 10.4, 10.5) der Straße (10) zugeordnet werden können.

14. Fahrerassistenzsystem gemäß Anspruch 13,
**dadurch gekennzeichnet, dass**
die Passierbarkeits-Bewertung durch eine Steuerungseinheit empfangbar ist; wobei anhand der Passierbarkeits-Bewertung ein Steuerungssignal erzeugbar ist, in Abhängigkeit von dem eine zumindest teilweise automatische Fahrt des Fahrzeugs (1) im Bereich des Straßenabschnitts durchführbar ist.

**Claims**

1. Method for operating a driver assistance system for a vehicle (1) on a road (10), in which

surroundings data about the road (10) and about the surroundings of the vehicle (1) are recorded; wherein the recorded surroundings data comprise road data about the course of the portion of the road (18) that is located in front of the vehicle (1) in the direction of travel (F), about one or more lanes (10.1, 10.2, 10.3, 10.4, 10.5) of the road (10) and about traffic control devices (12, 13);

at least one traffic control for a road portion located in front of the vehicle (1) in the direction of travel (F) is detected and assigned to the vehicle (1) on the basis of the recorded surroundings data; and

a passability assessment is generated and output for the road portion on the basis of the traffic control assigned to the vehicle (1);

**characterized in that**

the passability assessment is further generated on the basis of a confidence parameter $(\gamma_j, \theta_i)$ which is determined on the basis of the recorded surroundings data and comprises a measure of the complexity of a control situation for the road portion; wherein

the confidence parameter is determined without the concrete determination of an assignment of the traffic control to the vehicle; wherein

the confidence parameter $(\gamma_j, \theta_i)$ decreases with an increasing number of possible combinations in which the traffic control devices (12, 13) can be assigned to the lanes (10.1, 10.2, 10.3, 10.4, 10.5) of the road (10).

2. Method according to any of the preceding claims,
**characterized in that**
furthermore, map data about the road (10) in the surroundings of the vehicle (1) are recorded; wherein the map data comprise information about a number of lanes (10.1, 10.2, 10.3, 10.4, 10.5) of the road (10), the position of intersections and/or the position of traffic control devices (12, 13).

3. Method according to either of the preceding claims,
**characterized in that**
the recorded surroundings data comprise ego position probability data; and an ego position probability distribution for the ego position of the vehicle (1) is determined on the basis of the ego-position data.

4. Method according to claim 3,
**characterized in that**
the road (10) has at least two lanes (10.1, 10.2, 10.3, 10.4, 10.5) and the ego position probability distribution is determined relative to the lanes (10.1, 10.2, 10.3, 10.4, 10.5) of the road (10).

5. Method according to claim 3 or claim 4,
**characterized in that**
the assignment of the detected traffic control to the vehicle (1) is carried out on the basis of the ego position probability distribution.

6. Method according to any of the preceding claims,
**characterized in that**
the recorded surroundings data comprise traffic control data; and in order to detect the traffic control, a traffic control probability distribution is determined for a plurality of predefined traffic control categories on the basis of the traffic control data.

7. Method according to any of the preceding claims,
**characterized in that**
an assignment probability distribution for an assignment of traffic control devices (12, 13) to the vehicle (1) is determined on the basis of the recorded surroundings data.

8. Method according to any of the preceding claims,
**characterized in that**
the passability assessment comprises a passability probability distribution.

9. Method according to any of claims 3 to 8,
**characterized in that**
temporal smoothing is carried out using a smoothing parameter $(\alpha)$ for at least one of the determined probability distributions, wherein preferably exponential moving averaging, particularly preferably conditional moving exponential averaging, is carried out.

10. Method according to claim 9,
**characterized in that**
a crossing state is determined on the basis of the recorded surroundings data; and the smoothing parameter ($\alpha$) is determined on the basis of the crossing state.

11. Method according to any of the preceding claims,
**characterized in that**
the confidence parameter ($\gamma_j$, $\theta_i$) is determined by means of a machine learning method.

12. Method according to any of the preceding claims,
**characterized in that**
the passability assessment is generated for a predetermined set of driving maneuvers.

13. Driver assistance system for a vehicle (1) on a road (10), comprising

a detection unit (2), by means of which surroundings data about the road (10) and about the surroundings of the vehicle (1) can be detected; wherein
the recorded surroundings data comprise road data about the course of the portion of the road 18) that is located in front of the vehicle (1) in the direction of travel (F), about one or more lanes (10.1, 10.2, 10.3, 10.4, 10.5) of the road (10) and about traffic control devices (12, 13);
a recognition unit (4), by means of which at least one traffic control for a road portion (11) located in front of the vehicle (1) in the direction of travel can be detected on the basis of the recorded surroundings data;
an assignment unit (5), by means of which the detected traffic control can be assigned to the vehicle; and
an evaluation unit (6), by means of which a passability assessment can be generated and output for the road portion on the basis of the traffic control assigned to the vehicle;
**characterized in that**
the passability assessment can further be generated on the basis of a confidence parameter ($\gamma_j$, $\theta_i$) which can be determined on the basis of the recorded surroundings data and comprises a measure of the complexity of a control situation for the road portion; wherein
the confidence parameter can be determined without the concrete determination of an assignment of the traffic control to the vehicle; wherein
the confidence parameter ($\gamma_j$, $\theta_i$) decreases with an increasing number of possible combinations in which the traffic control devices (12, 13) can be assigned to the lanes (10.1, 10.2, 10.3, 10.4, 10.5) of the road (10).

14. Driver assistance system according to claim 13,
**characterized in that**
the passability assessment can be received by a control unit; wherein a control signal is generated on the basis of the passability assessment, on the basis of which at least partially automated travel of the vehicle (1) in the region of the road portion can be carried out.

**Revendications**

1. Procédé permettant de faire fonctionner un système d'assistance au conducteur pour un véhicule (1) sur une route (10), selon lequel

des données d'environnement sont collectées sur la route (10) et sur un environnement du véhicule (1) ; dans lequel
les données d'environnement collectées comprennent des données routières sur le tracé de la section de la route (18) se trouvant devant le véhicule (1) dans le sens de la marche (F) sur une ou plusieurs voies de circulation (10.1, 10.2, 10.3, 10.4, 10.5) de la route (10) ainsi que sur des équipements de régulation du trafic (12, 13) ;
à l'aide des données d'environnement collectées, au moins une régulation du trafic pour une section de route se trouvant devant le véhicule (1) dans le sens de la marche (F) est collectée et associée au véhicule (1) ; ainsi que
une évaluation de praticabilité est générée et émise pour la section de route à l'aide de la régulation du trafic associée au véhicule (1) ;
**caractérisé en ce que**
l'évaluation de praticabilité est en outre générée à l'aide d'un paramètre de confiance ($\gamma_j$, $\theta_i$) déterminé à l'aide des données d'environnement collectées et comprend une mesure d'une complexité d'une situation de régulation pour la section de route ; dans lequel

le paramètre de confiance est déterminé sans la détermination concrète d'une association de la régulation du trafic au véhicule ; dans lequel

le paramètre de confiance $(\gamma_j, \theta_i)$ diminue pour un nombre croissant de possibilités de combinaisons selon lesquelles les dispositifs de régulation du trafic (12, 13) peuvent être associés aux voies de circulation (10.1, 10.2, 10.3, 10.4, 10.5) de la route (10).

**2.** Procédé selon l'une des revendications précédentes,
**caractérisé en ce que**
en outre, des données cartographiques sur la route (10) dans l'environnement du véhicule (1) sont collectées ; dans lequel les données cartographiques comprennent des informations sur un nombre de voies de circulation (10.1, 10.2, 10.3, 10.4, 10.5) de la route (10), la position de croisements et/ou la position de dispositifs de régulation du trafic (12, 13).

**3.** Procédé selon l'une des revendications précédentes,
**caractérisé en ce que**
les données d'environnement collectées comprennent des données d'ego-position ; et une distribution de probabilité d'ego-position pour l'ego-position du véhicule (1) est déterminée à l'aide des données d'ego-position.

**4.** Procédé selon la revendication 3,
**caractérisé en ce que**
la route (10) présente au moins deux voies de circulation (10.1, 10.2, 10.3, 10.4, 10.5) et la distribution de probabilité d'ego-position est déterminée par rapport aux voies de circulation (10.1, 10.2, 10.3, 10.4, 10.5) de la route (10).

**5.** Procédé selon la revendication 3 ou 4,
**caractérisé en ce que**
l'association de la régulation du trafic collectée au véhicule (1) s'effectue à l'aide de la distribution de probabilité d'ego-position.

**6.** Procédé selon l'une des revendications précédentes,
**caractérisé en ce que**
les données d'environnement collectées comprennent des données de régulation de trafic ; et pour collecter la régulation du trafic à l'aide des données de régulation du trafic, une distribution de probabilité de régulation du trafic est déterminée pour une pluralité de catégories de régulation du trafic prédéfinies.

**7.** Procédé selon l'une des revendications précédentes,
**caractérisé en ce que**
une distribution de probabilité d'association pour une association de dispositifs de régulation du trafic (12, 13) au véhicule (1) est déterminée à l'aide des données d'environnement collectées.

**8.** Procédé selon l'une des revendications précédentes,
**caractérisé en ce que**
l'évaluation de praticabilité comprend une distribution de probabilité de praticabilité.

**9.** Procédé selon l'une des revendications 3 à 8,
**caractérisé en ce que**
pour au moins l'une des distributions de probabilité déterminées, un lissage temporel est réalisé à l'aide d'un paramètre de lissage $(\alpha)$, dans lequel de préférence une moyenne glissante exponentielle, de manière particulièrement préférée une moyenne glissante exponentielle conditionnelle est réalisée.

**10.** Procédé selon la revendication 9,
**caractérisé en ce que**
un état de franchissement est déterminé à l'aide des données d'environnement collectées ; et le paramètre de lissage $(\alpha)$ est déterminé en fonction de l'état de franchissement.

**11.** Procédé selon l'une des revendications précédentes,
**caractérisé en ce que**
le paramètre de confiance $(\gamma_j, \theta_i)$ est déterminé au moyen d'un procédé d'apprentissage automatique.

**12.** Procédé selon l'une des revendications précédentes,
**caractérisé en ce que**
l'évaluation de praticabilité est générée pour une quantité donnée de manœuvres de conduite.

**13.** Système d'assistance au conducteur pour un véhicule (1) sur une route (10), comprenant

une unité de collecte (2) par laquelle les données d'environnement sur la route (10) et sur un environnement du véhicule (1) peuvent être collectées ; dans lequel
les données d'environnement collectées comprennent des données routières sur le tracé de la section de la route (18) se trouvant devant le véhicule (1) dans le sens de la marche (F) sur une ou plusieurs voies de circulation (10.1, 10.2, 10.3, 10.4, 10.5) de la route (10) ainsi que sur des équipements de régulation du trafic (12, 13) ;
une unité de reconnaissance (4) par laquelle, à l'aide des données d'environnement collectées, au moins une régulation du trafic pour une section de route (11) se trouvant devant le véhicule (1) dans le sens de la marche peut être collectée ;
une unité d'association (5), par laquelle la régulation du trafic collectée peut être associée au véhicule ; et
une unité d'évaluation (6) par laquelle une évaluation de praticabilité peut être générée et émise pour la section de route à l'aide de la régulation du trafic associée au véhicule ;
**caractérisé en ce que**
l'évaluation de praticabilité peut en outre être générée à l'aide d'un paramètre de confiance ($\gamma_j$, $\theta_i$) qui peut être déterminé à l'aide des données d'environnement collectées et qui comprend une mesure d'une complexité d'une situation de régulation pour la section de route ; dans lequel
le paramètre de confiance peut être déterminé sans la détermination concrète d'une association de la régulation du trafic au véhicule ; dans lequel
le paramètre de confiance ($\gamma_j$, $\theta_i$) diminue pour un nombre croissant de possibilités de combinaisons selon lesquelles les dispositifs de régulation du trafic (12, 13) peuvent être associés aux voies de circulation (10.1, 10.2, 10.3, 10.4, 10.5) de la route (10).

**14.** Système d'assistance au conducteur selon la revendication 13,
**caractérisé en ce que**
l'évaluation de praticabilité peut être reçue par une unité de commande ; dans lequel un signal de commande peut être généré à l'aide de l'évaluation de praticabilité, en fonction duquel une conduite au moins partiellement automatique du véhicule (1) peut être effectuée dans la zone de la section de route.

FIG. 1A

FIG. 1B

13

10

10.1

FIG. 2A

13

13

13

13

13

10

10.1

12    12    12

10.2

10.3

FIG. 2B

13

13    13

10

10.1

10.5

10.2    10.3    10.4

FIG. 2C

FIG. 3A

FIG. 3B

FIG. 3C

FIG. 3D

FIG. 4A

FIG. 4B

FIG. 4C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020050220429 A1
- DE 102014011117 A1
- US 20160293004 A1
- DE 102013005362